# EUROPEAN PATENT APPLICATION

(11) **EP 4 852 497 A1**
(43) Date of publication of application: **09.12.2026**
(21) Application number: 24920912.3
(22) Date of filing: 31.01.2024
(51) Int. Cl.: H04W 24/06

(54) **WIRELESS COMMUNICATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN)
(74) Representative: Taor, Simon Edward William
(86) International application number: PCT/CN2024/075070
(87) International publication number: WO 2025/160845

(57) **Abstract**

Provided in the embodiments of the present application are a wireless communication method and apparatus, and a device and a storage medium. The method comprises: a terminal device predicting first prediction information on the basis of one or more first measurement results, wherein the first prediction information is related to one or more first prediction results, the first measurement result is a measurement result that is obtained by means of measuring a first cell, and the first prediction result is a measurement result of a second cell that is predicted on the basis of the one or more first measurement results.

## Description

### TECHNICAL FIELD

Embodiments of the present disclosure relate to the technical field of mobile communications, and in particular, to a wireless communication method, apparatus, device and storage medium.

### BACKGROUND

In related arts, enhancements to Layer 1 (L1)/Layer 2 (L2) Triggered Mobility (LTM) are standardized. From a physical layer (i.e., L1) perspective, a terminal device premeasures a plurality of candidate cells (including a current serving cell) via downlink measurement resources configured by a network device, and then reports measurement results to the network device. The network device indicates a selected candidate cell (i.e., a target cell) and/or a selected beam through a cell switch command.

For measurement and reporting, the terminal device may perform measurement in a plurality of candidate cells (including the current serving cell) configured by the network device, and provide up to M multiplied by L (depending on UE capability, where L is the number of candidate cells and M is the number of beams per cell) measurement results in one report.

### SUMMARY

Embodiments of the present disclosure provide a wireless communication method, apparatus, device and storage medium.

A wireless communication method provided in an embodiment of the present disclosure includes:
a terminal device predicts first prediction information based on one or more first measurement results, where the first prediction information is associated with one or more first prediction results, the one or more first measurement results are measurement results obtained by measuring one or more first cells, and the one or more first prediction results are measurement results of one or more second cells predicted based on the one or more first measurement results.

A wireless communication method provided in an embodiment of the present disclosure includes:
a network device receives second information sent by a terminal device, where the second information is configured to indicate one or more second mobility events, the one or more second mobility events are first mobility events being reported, the first mobility events are associated with one or more first prediction results, the one or more first prediction results are measurement results of one or more second cells predicted based on one or more first measurement results, and the one or more first measurement results are measurement results obtained by measuring one or more first cells;
where the one or more first measurement results are arranged to predict first prediction information, and the first prediction information is associated with the one or more first prediction results.

A wireless communication method provided in an embodiment of the present disclosure includes:
a terminal device sends one or more first measurement results to a network device, where the one or more first measurement results are measurement results obtained by measuring one or more first cells; the one or more first measurement results are configured to predict first prediction information, the first prediction information is associated with one or more first prediction results, and the one or more first prediction results are measurement results of one or more second cells predicted based on the one or more first measurement results.

A wireless communication method provided in an embodiment of the present disclosure includes:
a network device receives one or more first measurement results sent by a terminal device, where the one or more first measurement results are measurement results obtained by measuring one or more first cells;
the network device predicts first prediction information based on the one or more first measurement results, where the first prediction information is associated with one or more first prediction results, and the first prediction results are measurement results of one or more second cells predicted based on the one or more first measurement results.

A terminal device provided in an embodiment of the present disclosure includes:
a first processing unit, configured to predict first prediction information based on one or more first measurement results, where the first prediction information is associated with one or more first prediction results, the one or more first measurement results are measurement results obtained by measuring one or more first cells, and the one or more first prediction results are measurement results of one or more second cells predicted based on the one or more first measurement results.

A network device provided in an embodiment of the present disclosure includes:
a first communication unit, configured to receive second information sent by a terminal device, where the second information is arranged to indicate one or more second mobility event, the one or more second mobility events are reported one or more first mobility events, the one or more first mobility events are associated with one or more first prediction results, the one or more first prediction results are measurement results of one or more second cells predicted based on one or more first measurement results, and the one or more first measurement results are measurement results obtained by measuring one or more first cells; and
wherein the one or more first measurement results are arranged to predict first prediction information, and the first prediction information is associated with the one or more first prediction results.

A terminal device provided in an embodiment of the present disclosure includes:
a second communication unit, configured to send one or more first measurement results to a network device, where the one or more first measurement results are measurement results obtained by measuring one or more first cells, the one or more first measurement results are arranged to predict first prediction information, the first prediction information is associated with one or more first prediction results, and the one or more first prediction results are measurement results of one or more second cells predicted based on the one or more first measurement results.

A network device provided in an embodiment of the present disclosure includes:
a third communication unit, configured to receive one or more first measurement results sent by a terminal device, wherein the one or more first measurement results are measurement results obtained by measuring one or more first cells; and
a second processing unit, configured to predict first prediction information based on the one or more first measurement results, wherein the first prediction information is associated with one or more first prediction results, and the one or more first prediction results are measurement results of one or more second cells predicted based on the one or more first measurement results.

A communication device provided in an embodiment of the present disclosure may be the terminal device in the above solutions, and the communication device includes a processor and a memory. The memory is configured to store a computer program, and the processor is configured to call and run the computer program stored in the memory, so as to execute the wireless communication method performed by the terminal device.

A communication device provided in an embodiment of the present disclosure may be the network device in the above solutions, and the communication device includes a processor and a memory. The memory is configured to store a computer program, and the processor is configured to call and run the computer program stored in the memory, so as to execute the above wireless communication method performed by the network device.

A chip provided in an embodiment of the present disclosure is configured to implement the above wireless communication method.

Specifically, the chip includes: a processor configured to call and run a computer program from a memory, so as to cause a device mounted with the chip to execute the above wireless communication method.

A computer-readable storage medium provided in an embodiment of the present disclosure is configured to store a computer program, where the computer program causes a computer to execute the above wireless communication method.

A computer program product provided in an embodiment of the present disclosure includes computer program instructions, where the computer program instructions cause a computer to execute the above wireless communication method.

A computer program provided in an embodiment of the present disclosure, when run on a computer, causes the computer to execute the above wireless communication method.

With the above technical solution, the terminal device determines first prediction information associated with predicted measurement results of one or more second cells based on one or more first measurement results. Therefore, in a case where measurement is performed on one or more first cells, measurement results of one or more second cells are predicted, and the first prediction information is obtained based on the predicted measurement results of the one or more second cells, which reduces overhead of reference signals used for cell measurement.

### BRIEF DESCRIPTION OF THE DRAWINGS

The drawings described herein are provided for a further understanding of the present disclosure and constitute a part of the present disclosure. The schematic embodiments of the present disclosure and descriptions thereof are used to explain the present disclosure and do not constitute an improper limitation to the present disclosure. In the drawings:
FIG. 1 is a schematic diagram of an application scenario according to an embodiment of the present disclosure.
FIG. 2 is an alternative schematic diagram of a neuron structure according to an embodiment of the present disclosure.
FIG. 3 is an alternative schematic diagram of a fully connected neural network structure according to an embodiment of the present disclosure.
FIG. 4 is an alternative schematic flowchart of a wireless communication method according to an embodiment of the present disclosure.
FIG. 5 is an alternative schematic flowchart of a wireless communication method according to an embodiment of the present disclosure.
FIG. 6 is an alternative schematic flowchart of a wireless communication method according to an embodiment of the present disclosure.
FIG. 7 is an alternative schematic flowchart of a wireless communication method according to an embodiment of the present disclosure.
FIG. 8 is an alternative schematic flowchart of a wireless communication method according to an embodiment of the present disclosure.
FIG. 9 is an alternative schematic flowchart of a wireless communication method according to an embodiment of the present disclosure.
FIG. 10 is an alternative schematic flowchart of a wireless communication method according to an embodiment of the present disclosure.
FIG. 11 is an alternative schematic flowchart of a wireless communication method according to an embodiment of the present disclosure.
FIG. 12 is an alternative schematic flowchart of a wireless communication method according to an embodiment of the present disclosure.
FIG. 13 is an alternative schematic flowchart of a wireless communication method according to an embodiment of the present disclosure.
FIG. 14 is an alternative schematic flowchart of a wireless communication method according to an embodiment of the present disclosure.
FIG. 15 is an alternative schematic flowchart of a wireless communication method according to an embodiment of the present disclosure.
FIG. 16 is an alternative schematic flowchart of a wireless communication method according to an embodiment of the present disclosure.
FIG. 17 is an alternative schematic flowchart of a wireless communication method according to an embodiment of the present disclosure.
FIG. 18 is an alternative schematic flowchart of a wireless communication method according to an embodiment of the present disclosure.
FIG. 19 is an alternative schematic flowchart of a wireless communication method according to an embodiment of the present disclosure.
FIG. 20 is an alternative scenario schematic diagram of a wireless communication method according to an embodiment of the present disclosure.
FIG. 21 is an alternative scenario diagram of outputs of a model according to an embodiment of the present disclosure.
FIG. 22 is an alternative schematic flowchart of a wireless communication method according to an embodiment of the present disclosure.
FIG. 23 is an alternative structural schematic diagram of a terminal device according to an embodiment of the present disclosure.
FIG. 24 is an alternative structural schematic diagram of a network device according to an embodiment of the present disclosure.
FIG. 25 is an alternative structural schematic diagram of a terminal device according to an embodiment of the present disclosure.
FIG. 26 is an alternative structural schematic diagram of a network device according to an embodiment of the present disclosure.
FIG. 27 is a schematic structural diagram of a communication device according to an embodiment of the present disclosure.
FIG. 28 is a schematic structural diagram of a chip according to an embodiment of the present disclosure.
FIG. 29 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure. Obviously, the described embodiments are part of the embodiments of the present disclosure, rather than all of the embodiments. Based on the embodiments in the present disclosure, all other embodiments obtained by those of ordinary skill in the art without creative efforts shall fall within the protection scope of the present disclosure.

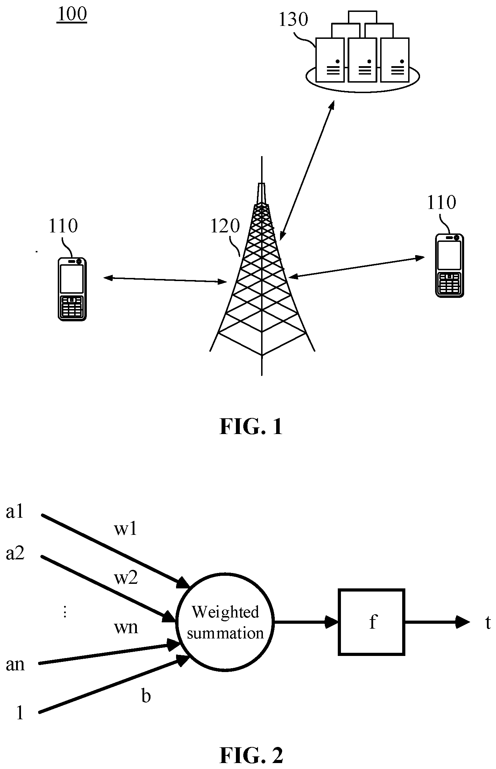

FIG. 1 is a schematic diagram of an application scenario according to an embodiment of the present disclosure.

As shown in FIG. 1, a communication system 100 may include a terminal device 110 and a network device 120. The network device 120 may communicate with the terminal device 110 over an air interface. Multi-service transmission is supported between the terminal device 110 and the network device 120.

It should be understood that the embodiment of the present disclosure is only exemplarily described with the communication system 100, but the embodiment of the present disclosure is not limited thereto. That is, the technical solutions of the embodiments of the present disclosure may be applied to various communication systems, for example: a Long Term Evolution (LTE) system, an LTE Time Division Duplex (TDD) system, a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system.

In the communication system 100 shown in FIG. 1, the network device 120 may be an access network device that communicates with the terminal device 110. The access network device may provide communication coverage for a specific geographic area, and may communicate with the terminal device 110 (e.g., User Equipment (UE)) located within the coverage area.

The network device 120 may be an evolved Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN).

The terminal device 110 may be any terminal device, including but not limited to a terminal device connected to the network device 120 or other terminal devices in a wired or wireless manner.

For example, the terminal device 110 may refer to an access terminal, a UE, a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or other processing device connected to a wireless modem, an in-vehicle device, a wearable device, a terminal device in a 5G network, or a terminal device in a future evolved network.

The terminal device 110 may be used for Device to Device (D2D) communication.

The wireless communication system 100 may further include a core network device 130 that communicates with the base station. The core network device 130 may be a 5G Core (5GC) device, for example, an Access and Mobility Management Function (AMF) device, an Authentication Server Function (AUSF) device, a User Plane Function (UPF) device, or a Session Management Function (SMF) device. Optionally, the core network device 130 may also be an Evolved Packet Core (EPC) device of an LTE network, for example, a Session Management Function + Core Packet Gateway (SMF+PGW-C) device. It should be understood that SMF+PGW-C may implement functions that can be implemented by both SMF and PGW-C. During network evolution, the above core network device may also be called other names, or a new network entity may be formed by dividing functions of the core network, which is not limited in the embodiment of the present disclosure.

All functional units in the communication system 100 may also establish connections through next generation (NG) interfaces to implement communication.

For example, a terminal device establishes an air interface connection with an access network device through a Uu interface for transmitting user plane data and control plane signaling; the terminal device may establish a control plane signaling connection with an AMF through an NG interface 1 (abbreviated as N1); an access network device, e.g., a next generation radio access base station (gNB), may establish a user plane data connection with a UPF through an NG interface 3 (abbreviated as N3); the access network device may establish a control plane signaling connection with an AMF through an NG interface 2 (abbreviated as N2); the UPF may establish a control plane signaling connection with an SMF through an NG interface 4 (abbreviated as N4); the UPF may exchange user plane data with a data network through an NG interface 6 (abbreviated as N6); the AMF may establish a control plane signaling connection with an SMF through an NG interface 11 (abbreviated as N11); the SMF may establish a control plane signaling connection with a PCF through an NG interface 7 (abbreviated as N7).

FIG. 1 exemplarily shows one base station, one core network device, and two terminal devices. Optionally, the wireless communication system 100 may include multiple base station devices, and the coverage area of each base station may include other numbers of terminal devices, which is not limited in the embodiment of the present disclosure.

It should be noted that FIG. 1 only schematically shows a system to which the present disclosure is applicable by way of example. Of course, the method shown in the embodiment of the present disclosure may also be applied to other systems. In addition, the terms "system" and "network" are often used interchangeably herein. The term "and/or" herein is merely an association relationship describing associated objects, indicating that three relationships may exist, for example, A and/or B may indicate: A exists alone, A and B exist simultaneously, and B exists alone. In addition, the character "/" herein generally indicates that the associated objects are in an "or" relationship. It should also be understood that the "indication" mentioned in the embodiments of the present disclosure may be a direct indication, an indirect indication, or an indication of an association relationship. For example, A indicates B may mean that A directly indicates B, e.g., B may be obtained through A; it may also mean that A indirectly indicates B, e.g., A indicates C, and B may be obtained through C; or it may mean that an association relationship exists between A and B. It should also be understood that the "correspondence" mentioned in the embodiments of the present disclosure may mean a direct correspondence or an indirect correspondence between the two, an association relationship between the two, or a relationship of indication and indicated, configuration and configured, etc. It should also be understood that the "predefined" or "predefined rule" mentioned in the embodiments of the present disclosure may be implemented by pre-storing corresponding codes, tables or other manners for indicating relevant information in devices (e.g., including terminal devices and network devices), and the specific implementation manner of the present disclosure is not limited thereto. For example, predefined may mean defined in a protocol. It should also be understood that in the embodiments of the present disclosure, the "protocol" may refer to a standard protocol in the communication field, for example, may include an LTE protocol, an NR protocol, and related protocols applied to future communication systems, which is not limited in the present disclosure.

To facilitate understanding of the technical solutions of the embodiments of the present disclosure, related technologies of the embodiments of the present disclosure are described below. The following related technologies may be arbitrarily combined with the technical solutions of the embodiments of the present disclosure as optional solutions, all of which fall within the protection scope of the embodiments of the present disclosure.

### Layer 1/Layer 2 Triggered Mobility (LTM)

An NR system only supports mobility of Layer 3 (i.e., Radio Resource Control (RRC) layer) from Release (R) 15 to R17. Starting from R18, the NR standardizes enhancements of LTM. From a physical layer (i.e., Layer 1 (L1)) perspective, a UE premeasures multiple candidate cells (including a current serving cell) via downlink measurement resources configured by a Network (NW), and then reports measurement results to the NW, i.e., a network device. The NW indicates a selected candidate cell (i.e., a target cell) and/or a selected beam through a cell switch command.

For measurement and reporting, the UE may perform measurement in multiple candidate cells (including the current serving cell) configured by the NW, and provide up to M × L measurement results (depending on UE capabilities, where L is the number of candidate cells and M is the number of beams per cell) in one report. Obviously, measurement of a large number of candidate cells requires a large overhead of reference signals and a time delay required for the UE to measure these reference signals, after all, the UE often cannot simultaneously measure multiple beams of multiple candidate cells.

After the UE completes measurement and reports the measurement results to the NW, the NW may indicate the UE to hand over to a target cell through a Media Access Control-Control Element (MAC CE) of a Cell Switch Command (CSC). The CSC at least includes target cell information (e.g., candidate cell index) and/or selected beam information (i.e., indicated by one or more Unified Transmission Configuration Indication (TCI) state Identity documents (IDs)).

### Artificial Intelligence (AI)/Machine Learning (ML) Model

A neural network is an operation model composed of multiple neuron nodes connected to each other, where a connection between nodes represents a weight value from an input signal to an output signal, referred to as a weight; each node performs weighted summation on different input signals and outputs through a specific activation function. A neuron structure is shown in FIG. 2. Weighted summation (sum) is performed on a₁ to a 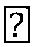 and 1 through weights w₁ to w 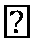 and b respectively, and a result of the weighted summation is output through an activation function f to obtain an output t.

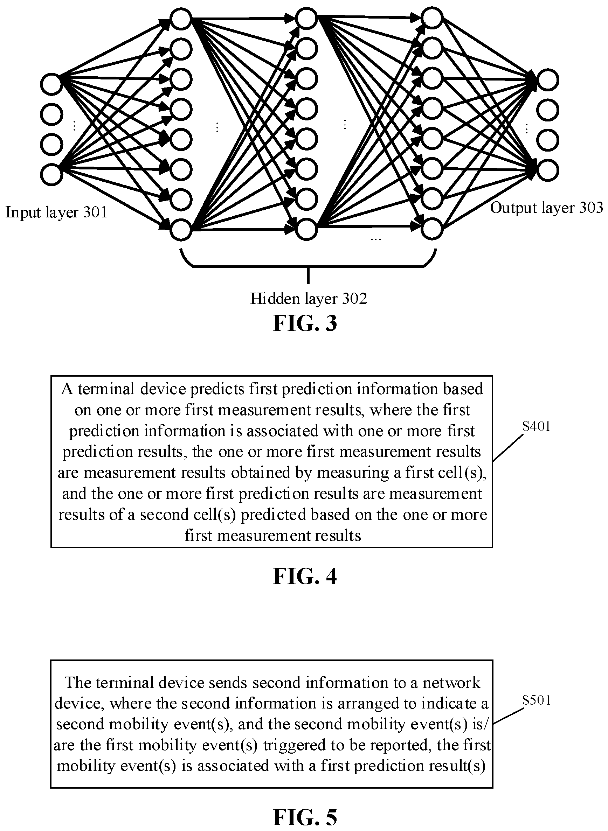

A simple neural network is shown in FIG. 3, including an input layer 301, a hidden layer 302, and an output layer 302. Different outputs may be generated through different connection modes, weights and activation functions of multiple neurons, so as to fit a mapping relationship from input to output. Each upper-level node is connected to all its lower-level nodes. Such a fully connected model may also be referred to as a Deep Neural Network (DNN). The Neural Network (NN) model may perform beam prediction in a spatial domain.

An NN model may be trained and obtained through processes such as dataset construction, training, verification and testing. It is assumed that all NN models have been trained in advance through offline training or online training. It should be noted that offline training and online training are not mutually exclusive. First, the NW may obtain a static training result through dataset offline training, which may be referred to as offline training herein. During use of the NN by the NW or the UE, with further measurement and/or reporting of the UE, the NN model may continue to collect more data and perform real-time online training to optimize parameters of the NN model, so as to achieve better inference and prediction results.

It should be noted that a beam may refer to a transmit beam or a receive beam. In a protocol, the term "transmit/receive spatial filter" is generally used instead of the implementation-oriented term transmit/receive beam. In the embodiments of the present disclosure, the terms "beam" and "spatial filter" are interchangeable.

For a model, its output may be understood as inference or prediction, where inference and prediction represent the same meaning and are interchangeable.

For LTM in R18 standardization, the UE is responsible for a large number of downlink measurements and reports the measurement results to the NW. Since event-triggered reporting of mobility events is not defined in R18, the UE can only perform downlink multi-cell and/or multi-beam measurement step by step and report a large number of measurement results to the NW, lacking autonomy and selectivity in reporting.

Assuming that 3GPP defines mobility events of LTM in a later release, the UE also needs a large number of measurements to determine whether a condition for triggering a mobility event is satisfied. The measurement behavior itself also occupies a large amount of measurement resources and measurement overhead of the UE, such as time-frequency resources occupied by a beam scanning process. In addition, during a large number of measurements, the UE may need protection of Measurement Gap, so it needs to temporarily stop downlink reception and uplink transmission of a current cell, affecting normal communication.

Therefore, using AI/ML technologies to predict whether an LTM event(s) occur(s) and related information of the LTM event(s) may serve as a technical path to solve LTM problems.

To facilitate understanding of the technical solutions of the embodiments of the present disclosure, the technical solutions of the present disclosure are described in detail below through specific embodiments. The above related technologies may be arbitrarily combined with the technical solutions of the embodiments of the present disclosure as optional solutions, all of which fall within the protection scope of the embodiments of the present disclosure. The embodiments of the present disclosure include at least part of the following content.

An embodiment of the present disclosure provides a wireless communication method applied to a terminal device. As shown in FIG. 4, the method includes the following operations.

At S401, the terminal device predicts first prediction information based on one or more first measurement results, where the first prediction information is associated with one or more first prediction results, the one or more first measurement results are measurement results obtained by measuring the first cell(s), and the one or more first prediction results are measurement results of second cell(s) predicted based on the one or more first measurement results.

The terminal device measures a first number of first cell(s) to obtain a respective measurement result for each first cell in the first number of first cell(s), i.e., obtain the first number of first measurement results. The first number is an integer greater than or equal to 1.

It may be understood that, for one first cell, the terminal device measures one or more spatial filters corresponding to the first cell, and obtains a measurement result for the first cell based on measurement results of the one or more spatial filters.

For one first cell, the terminal device measures the first cell through one or more measurement resources of the first cell. It may be understood that one measurement resource corresponds to one spatial filter.

The one or more first measurement results in the embodiment of the present disclosure may be measurement results obtained by performing Layer 1 measurement on the first cell, and the first measurement results may include one or more of: L1-Reference Signal Receiving Power (RSRP), L1-Reference Signal Receiving Quality (RSRQ), L1-Received Signal Strength Indication (RSSI), L1-Signal to Interference plus Noise Ratio (SINR), and Signal-to-Noise Ratio (SNR).

The measurement resource of the first cell may be a Channel State Information-Reference Signal (CSI-RS) resource and/or a Synchronization Signal and PBCH Block (SSB) resource.

After determining the first number of first measurement results, the terminal device predicts the first prediction information based on the first number of first measurement results. The first prediction information is associated with the first prediction results. It may be understood that the first prediction information is determined based on the first prediction results.

The first prediction results are measurement results for second cell(s) predicted based on the first number of first measurement results. The first number of first measurement results may be arranged to predict one or more first prediction results, and different first prediction results among the multiple first prediction results correspond to different second cells. It may be understood that the first prediction result(s) is/are a measurement result(s) of the second cell(s), but the first prediction result(s) is/are not a measurement result(s) obtained by measuring the second cell(s), but a measurement result(s) predicted or inferred based on the first number of first measurement results.

It may be understood that the second cell(s) belong(s) to the first number of first cell(s) or does not belong to the first number of first cell(s).

In an example, the terminal device obtains first prediction information associated with prediction results of cell 4 and cell 5 based on measurement results of cell 1, cell 2 and cell 3, where the prediction results of cell 4 and cell 5 are predicted based on the measurement results of cell 1, cell 2 and cell 3.

In an example, the terminal device obtains first prediction information associated with prediction results of cell 3 and cell 4 based on measurement results of cell 1, cell 2 and cell 3, where the prediction results of cell 3 and cell 4 are predicted based on the measurement results of cell 1, cell 2 and cell 3.

In some embodiments, a first prediction model is deployed in the terminal device, and the first prediction model may be expressed as various models such as a function, a deep learning model, or a neural network model (e.g., DNN, CNN, RNN). The terminal device inputs the first number of first measurement results into the first prediction model to obtain first prediction information output by the first prediction model.

In the wireless communication method provided in the embodiment of the present disclosure, the terminal device determines first prediction information associated with predicted measurement results of one or more second cells based on one or more first measurement results, so that measurement results of one or more second cells are predicted in a case where measurement is performed on one or more first cells, and the first prediction information is obtained based on the predicted measurement results of the one or more second cells, thereby obtaining the first prediction information without measuring the one or more second cells and reducing overhead of reference signal(s) used for cell measurement.

In some embodiments, based on FIG. 4, an embodiment of the present disclosure provides a wireless communication method, applied to a terminal device. As shown in FIG. 5, the method includes the following operations.

At S501, the terminal device sends second information to a network device, where the second information is arranged to indicate a second mobility event(s), and the second mobility event(s) is/are first mobility event(s) triggered to be reported, the first mobility event(s) is/are associated with a first prediction result(s).

The first prediction information includes a first mobility event(s), and the first mobility event(s) is/are a mobility event(s) associated with the one or more first prediction results. A mobility event may be understood as an event related to mobility of the terminal device.

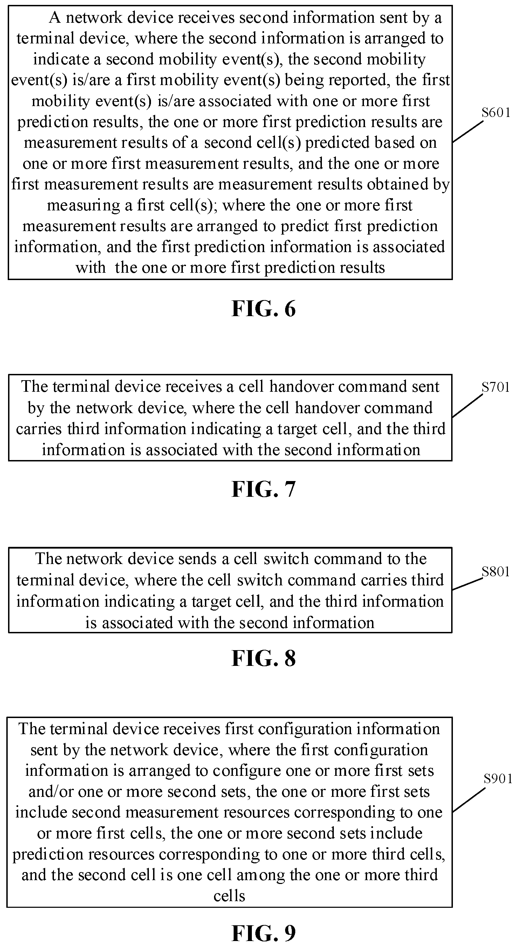

In some embodiments, an embodiment of the present disclosure provides a wireless communication method, applied to a network device. As shown in FIG. 6, the method includes the following operations.

[0111]At S601, a network device receives second information sent by a terminal device, where the second information is arranged to indicate a second mobility event(s), the second mobility event(s) is/are a first mobility event(s) being reported, the first mobility event(s) is/are associated with a first prediction result(s), the one or more first prediction results are a measurement result(s) of a second cell(s) predicted based on one or more first measurement results, and the one or more first measurement results are measurement results obtained by measuring one or more first cells;
where the one or more first measurement results are arranged to predict first prediction information, and the first prediction information is associated with the one or more first prediction results.

The wireless communication method shown in FIG. 5 or FIG. 6 is further described below.

The terminal device determines, based on the one or more first prediction results, that a first mobility event(s) occur(s) to the terminal device, and if the occurred first mobility event(s) trigger(s) reporting, the terminal device needs to report the reported first mobility event(s) to the network device. At this time, the terminal device sends second information to the network device, where the second information is arranged to indicate the reported first mobility event(s), i.e., the second mobility event(s).

The network device receives the second information sent by the terminal device, and determines, based on the second information, that the second mobility event(s) occur(s) to the terminal device.

It may be understood that the terminal device may determine one or more first mobility events based on the one or more first prediction results, and all or part of the determined one or more first mobility events are second mobility event(s).

In an embodiment of the present disclosure, if the terminal device predicts the second mobility event(s) based on the one or more first measurement results, the terminal device may directly report the second mobility event(s) to the network device without reporting the one or more first measurement results to the network device, thereby reducing signaling overhead.

In some embodiments, the first prediction information includes one or more of the following:
first indication information, where the first indication information is arranged to indicate whether one or more first mobility events occur, the first mobility event(s) being associated with the one or more first prediction results;
second indication information, where the second indication information is arranged to indicate an event type(s) of the occurred first mobility event(s); and/or
first information, where the first information indicates a first prediction result(s) corresponding to the occurred first mobility event(s).

In the embodiments of the present disclosure, the first indication information may be arranged to indicate whether one or more first mobility events occur to the terminal device.

It may be understood that different values of the first indication information are arranged to indicate that one or more first mobility events occur, or that no first mobility event occurs.

In some embodiments, the one or more first mobility events are mobility event(s) configured by a network device or predefined. In this case, the first indication information is arranged to indicate whether the mobility event(s) configured by the network device or predefined occur.

If a first mobility event occurs, the second indication information is arranged to indicate which first mobility event occurs. It may be understood that if multiple first mobility events occur, the first prediction information includes multiple pieces of second indication information, and different pieces of second indication information indicate event type(s) of different first mobility events.

The first information is arranged to indicate a first prediction result(s) corresponding to the occurred first mobility event(s).

In some embodiments, the one or more first mobility events include one or more of the following first events:
first event A: the one or more second cells corresponding to the one or more first mobility events include a serving cell, and link performance of the serving cell measured and/or predicted based on Layer 1 is better than a first threshold;
first event B: the one or more second cells include a serving cell, and link performance of the serving cell measured and/or predicted based on Layer 1 is worse than a second threshold;
first event C: the one or more second cells include a candidate cell and a serving cell, and link performance of the candidate cell measured and/or predicted based on Layer 1 is better than first link performance, where the first link performance is link performance of the serving cell plus a first offset;
first event D: the one or more second cells include a candidate cell, and link performance of the candidate cell measured and/or predicted based on Layer 1 is better than a third threshold;
first event E: the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
first event F: the one or more second cells include a candidate cell, and interference of the candidate cell measured and/or predicted based on Layer 1 is stronger than a first interference threshold.

It may be understood that the first event is a cell-level mobility event related to link performance of a serving cell and/or link performance of a candidate cell.

The one or more first mobility events predicted by the terminal device based on the one or more first measurement results include one or more of first event A to first event F.

For threshold value(s) such as the first threshold to the fifth threshold and the first interference threshold involved in first event A to first event F, values of different threshold values may be the same or different.

In the embodiment of the present disclosure, link performance of a cell may be represented by one or more of parameters characterizing link quality of the cell, including L1-RSRP, L1-RSRQ, L1-RSSI, L1-SINR and SNR of the cell.

It may be understood that if a second cell has both a first measurement result and a first prediction result, the terminal device may determine whether a first mobility event occurs in the second cell according to the first measurement result and/or the first prediction result of the second cell. Optionally, the terminal device determines whether a first mobility event occurs in the second cell according to the first measurement result of the second cell. Optionally, the terminal device determines whether a first mobility event occurs in the second cell according to the first prediction result of the second cell. Optionally, the terminal device determines whether a first mobility event occurs in the second cell according to a result with better link performance between the first measurement result and the first prediction result of the second cell.

In some embodiments, the one or more first mobility events include one or more of the following second events:
second event A: the one or more second cells corresponding to the one or more first mobility events include a serving cell, and performance of a serving spatial filter of the serving cell measured and/or predicted based on Layer 1 is better than a sixth threshold;
second event B: the one or more second cells include a serving cell, and performance of a serving spatial filter of the serving cell measured and/or predicted based on Layer 1 is worse than a seventh threshold;
second event C: the one or more second cells include a candidate cell and a serving cell, and performance of a candidate spatial filter of the candidate cell measured and/or predicted based on Layer 1 is better than second link performance, where the second link performance is performance of a serving spatial filter of the serving cell plus a second offset;
second event D: the one or more second cells include a candidate cell, and performance of a candidate spatial filter of the candidate cell measured and/or predicted based on Layer 1 is better than an eighth threshold;
second event E: the one or more second cells include a candidate cell, performance of a serving spatial filter of the serving cell measured and/or predicted based on Layer 1 is worse than a ninth threshold, and performance of a candidate spatial filter of the candidate cell measured and/or predicted based on Layer 1 is better than a tenth threshold; and/or
second event F: the one or more second cells include a candidate cell, and interference of a candidate beam of the candidate cell measured and/or predicted based on Layer 1 is stronger than a second interference threshold.

In the embodiments of the present disclosure, the second event is a beam-level, i.e., spatial filter-level, mobility event related to performance of a serving spatial filter and/or performance of a candidate spatial filter.

It may be understood that spatial filters of a serving cell are classified into a serving spatial filter and a candidate spatial filter, and a spatial filter of a candidate cell is a candidate spatial filter.

The one or more first mobility events predicted by the terminal device based on the one or more first measurement results include one or more of second event A to second event F.

For threshold values such as the sixth threshold to the tenth threshold and the second interference threshold involved in second event A to second event F, values of different threshold values may be the same or different.

In the embodiments of the present disclosure, performance of a spatial filter may be represented by one or more of parameters characterizing link quality of the spatial filter, including L1-RSRP, L1-RSRQ, L1-RSSI, L1-SINR and SNR of the spatial filter.

In the embodiments of the present disclosure, the first mobility event(s) determined by the terminal device based on the one or more first measurement results may be a cell-level mobility event(s) or a spatial filter-level mobility event(s).

If the terminal device determines multiple first mobility events based on the one or more first measurement results, the multiple first mobility events may all be cell-level mobility events, all be spatial filter-level mobility events, or partly be cell-level mobility events and partly be beam-level mobility events.

In an example, if first event A occurs, the first prediction information includes at least one of the following pieces of information:
first indication information with a first value, where the first indication information with the first value indicates that a first mobility event occurs;
an event type of first event A;
first information corresponding to first event A.

In an example, if first event A and second event B occur, the first prediction information includes at least one of the following pieces of information:
first indication information with a first value;
an event type of first event A and an event type of second event B;
first information corresponding to first event A and first information corresponding to second event B.

In an example, if no first mobility event occurs, the first prediction information includes at least one of the following pieces of information:
first indication information with a second value, where the first indication information with the second value indicates that no first mobility event occurs.

In some embodiments, the first information includes one or more of the following:
a cell index and/or cell link quality; and/or
cell link quality and/or spatial filter link quality.

It may be understood that if the occurred first mobility event(s) include(s) a cell-level first mobility event, the first information corresponding to the first mobility event(s) include(s) cell information corresponding to the first mobility event(s), where the cell information includes: an index of the cell and/or link quality of the cell.

If the occurred cell-level first mobility event(s) is/are related to a serving cell, the first information includes an index of the serving cell and link quality of the serving cell. In an example, if the occurred first mobility event(s) include(s) first event A, the first information includes an index of the serving cell and/or link quality of the serving cell.

If the occurred cell-level first mobility event(s) is/are related to a candidate cell, the first information includes an index of the candidate cell and link quality of the candidate cell. In an example, if the occurred first mobility event(s) include(s) first event D, the first information includes an index of the candidate cell and/or link quality of the candidate cell.

If the occurred cell-level first mobility event(s) is/are related to a serving cell and a candidate cell, the first information includes an index of the serving cell and/or link quality of the serving cell, as well as an index of the candidate cell and/or link quality of the candidate cell. In an example, if the occurred first mobility event(s) include(s) first event A and first event D, the first information includes: an index of the serving cell and/or link quality of the serving cell; and an index of the candidate cell and/or link quality of the candidate cell.

It may be understood that if the occurred first mobility event(s) include(s) a spatial filter-level first mobility event, the first information corresponding to the first mobility event(s) includes cell information and/or spatial filter information corresponding to the first mobility event(s), where the cell information includes: a cell index and/or cell link quality, and the spatial filter information includes: an index of a spatial filter and/or link quality of a spatial filter.

If the occurred spatial filter-level first mobility event(s) is/are related to a serving spatial filter, the cell information included in the first information is information of a serving cell, and the spatial filter information included in the first information is information of a serving spatial filter, i.e., the first information includes: an index of the serving cell and/or link quality of the serving cell, and/or an index of the serving spatial filter and/or link quality of the serving spatial filter.

In an example, if the occurred first mobility event(s) include(s) second event A, the first information includes an index of the serving spatial filter and/or link quality of the serving spatial filter.

In an example, if the occurred first mobility event(s) include(s) second event A, the first information includes an index of the serving cell and/or link quality of the serving cell.

In an example, if the occurred first mobility event(s) include(s) second event A, the first information includes an index of the serving cell and/or link quality of the serving cell, as well as an index of the serving spatial filter and/or link quality of the serving spatial filter.

If the occurred spatial filter-level first mobility event(s) is/are related to a candidate spatial filter, the cell information included in the first information is information of a candidate cell, and the spatial filter information included in the first information is information of a candidate spatial filter, i.e., the first information includes: an index of the candidate cell and/or link quality of the candidate cell, and/or an index of the candidate spatial filter and/or link quality of the candidate spatial filter.

In an example, if the occurred first mobility event(s) include(s) second event D, the first information includes: an index of the candidate spatial filter and/or link quality of the candidate spatial filter.

In an example, if the occurred first mobility event(s) include(s) second event D, the first information includes: an index of the candidate cell and/or link quality of the candidate cell.

In an example, if the occurred first mobility event(s) include(s) second event D, the first information includes: an index of the candidate cell and/or link quality of the candidate cell, as well as an index of the candidate spatial filter and/or link quality of the candidate spatial filter.

If the occurred spatial filter-level first mobility event(s) is/are related to a serving spatial filter and a candidate spatial filter, the cell information included in the first information includes information of a serving cell and information of a candidate cell, and the spatial filter information included in the first information includes information of a serving spatial filter and information of a candidate spatial filter, i.e., the first information includes:
an index of the serving cell and/or link quality of the serving cell, and/or an index of the serving spatial filter and/or link quality of the serving spatial filter;
and an index of the candidate cell and/or link quality of the candidate cell, and/or an index of the candidate spatial filter and/or link quality of the candidate spatial filter.

In the embodiments of the present disclosure, if the occurred first mobility event(s) include(s) a cell-level first mobility event and a spatial filter-level first mobility event, the first information corresponding to the cell-level first mobility event includes cell information, and the first information corresponding to the spatial filter-level first mobility event includes: spatial filter information.

It should be noted that after predicting the first prediction information, the terminal device may report, to the network device, an occurred first mobility event(s) indicated by the first prediction information, or may report, to the network device, a first mobility event(s) being reported among the occurred first mobility event(s) indicated by the first prediction information, i.e., a second mobility event(s).

In an example, the reported mobility event(s) include(s): first event B, first event C, first event D, second event B, second event C, and second event D. If the first prediction information indicates that first event A occurs, the terminal device does not send the second information, and in this case, the network device does not receive the second information.

In an example, the reported mobility event(s) include(s): first event B, first event C, first event D, second event B, second event C, and second event D. If the first prediction information indicates that first event A and second event B occur, the terminal device sends the second information, and the sent second information indicates second event B.

In an example, the reported mobility events include: first event B, first event C, first event D, second event B, second event C, second event D. If the first prediction information indicates that first event B and second event B occur, the terminal device sends the second information, and the sent second information indicates first event B and second event B.

In some embodiments, in a case where the terminal device reports a second mobility event(s), the second mobility event(s) is/are:
determined by the terminal device; or
indicated by the network device; or
predefined.

If the second mobility event(s) is/are determined by the terminal device, the terminal device may autonomously decide whether to report a first prediction result(s) of the mobility event(s).

If the second mobility event(s) is/are indicated by the network device, the terminal device reports the one or more first prediction results of the mobility event(s) according to configuration or indication of the network device.

If the second mobility event(s) is/are predefined, the terminal device reports the one or more first prediction results of the mobility event(s) according to a predefined definition in a protocol.

In an example, when the first prediction information indicates that first event A occurs, the terminal device does not need to report, nor trigger a subsequent LTM mobility operation.

In an example, when the first prediction information indicates that first event C occurs, the terminal reports a first prediction result of first event C.

In some embodiments, the second information is transmitted through one or more of the following signaling:
physical layer control signaling;
a Media Access Control Control Element (MAC CE) of a Media Access Control (MAC) layer; and/or
mobility-related signaling of a Radio Resource Control (RRC) layer.

In the embodiments of the present disclosure, the terminal device may use physical layer or higher-layer control signaling to bear the second information.

In some embodiments, when the terminal device reports a second mobility event(s), the reporting resource may be a periodic Physical Uplink Control Channel (PUCCH).

In some embodiments, a first uplink resource for reporting the second information is pre-configured by the network device to the terminal device, without requiring the terminal device to perform resource request.

In some embodiments, the second information may be included in a MAC CE of a MAC layer, or in mobility-related signaling of a higher layer (e.g., an RRC layer).

In some embodiments, for one said second mobility event, the second information includes one or more of the following pieces of information:
third indication information, where the third indication information is arranged to indicate an event type of the second mobility event; and/or
first information corresponding to the second mobility event.

For the description of the first information, reference may be made to the foregoing description, and details are not described herein again.

In some embodiments, based on FIG. 5, an embodiment of the present disclosure provides a wireless communication method applied to a terminal device. As shown in FIG. 7, the method includes the following operations.

At S701, the terminal device receives a cell switch command sent by the network device, where the cell switch command carries third information indicating a target cell, and the third information is associated with the second information.

In some embodiments, based on FIG. 6, an embodiment of the present disclosure provides a wireless communication method applied to a network device. As shown in FIG. 8, the method includes the following operations.

At S801, the network device sends a cell switch command to the terminal device, where the cell switch command carries third information indicating a target cell, and the third information is associated with the second information.

After receiving the second information sent by the terminal device, in response to the second information, the network device determines the third information based on the second information or not based on the second information, and sends the third information to the terminal device. The third information is arranged to indicate the target cell.

Optionally, the network device sends the third information to the terminal device by using a Cell Switch Command (CSC).

Optionally, the cell switch command itself is carried by a MAC CE, where the MAC CE includes a TCI state ID and a candidate cell index, the TCI state ID is arranged to indicate a candidate beam, and the candidate cell index is arranged to indicate the target cell.

After receiving the cell switch command from the network device, the terminal device completes a cell handover operation to hand over to the target cell within a certain period of time.

In this embodiment of the present disclosure, the target cell indicated by the third information may belong to the first cell(s) or may not belong to the first cell(s). It can be understood that if the target cell belongs to the first cell(s), the terminal device has measured the target cell; if the target cell does not belong to the first cell(s), the terminal device has not measured the target cell.

In some embodiments, if the target cell indicated by the third information does not belong to the first cell(s), the third information is further arranged to indicate first measurement resources, where the first measurement resources are used for measurement of the target cell and/or reporting of measurement results.

In a case that the target cell indicated by the third information is a cell that the terminal device has not measured before, the cell switch command may additionally indicate a group of measurement resources, namely the first measurement resources, and the terminal device may complete measurement and/or reporting of the target cell and/or target beam by using the first measurement resources. The first measurement resources may include a group of CSI-RS resources and/or SSB resources.

In an example, the terminal device may complete downlink synchronization by measuring SSB resources in the first measurement resources, and adjust a downlink receive spatial filter and the like.

In an example, the terminal device may perform time and frequency tracking by measuring CSI-RS of the target cell, or acquire CSI information of the cell in advance and feed back the CSI information to the network device.

In some embodiments, based on FIG. 4, FIG. 5 or FIG. 7, an embodiment of the present disclosure provides a wireless communication method. As shown in FIG. 9, the method includes the following operations.

At S901, the terminal device receives first configuration information sent by the network device, where the first configuration information is arranged to configure one or more first sets and/or one or more second sets, the one or more first sets include second measurement resources corresponding to one or more first cells, the one or more second sets include prediction resources corresponding to one or more third cells, and the second cell is one cell among the one or more third cells.

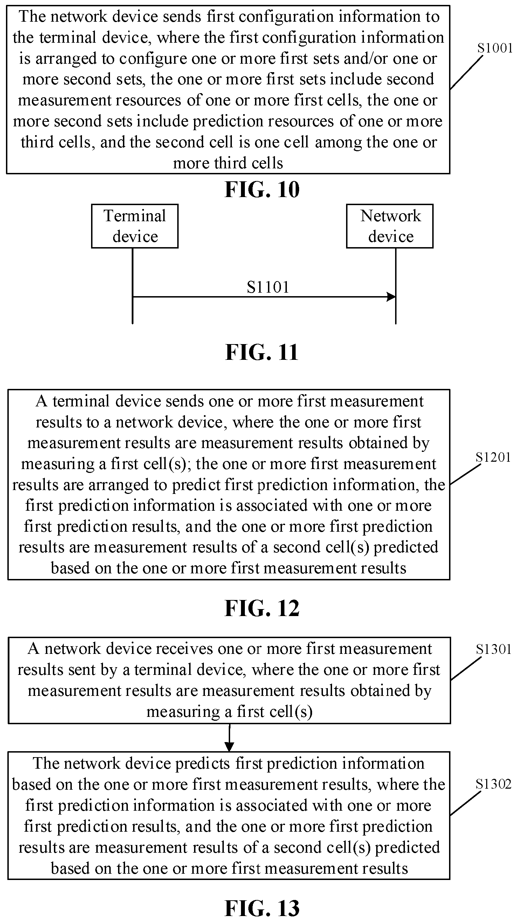

In some embodiments, based on FIG. 6 or FIG. 8, an embodiment of the present disclosure provides a wireless communication method. As shown in FIG. 10, the method includes the following operations.

At S1001, the network device sends first configuration information to the terminal device, where the first configuration information is arranged to configure one or more first sets and/or one or more second sets, the one or more first sets include second measurement resources of one or more first cells, the one or more second sets include prediction resources of one or more third cells, and the second cell is one cell among the one or more third cells.

The one or more first sets may be marked as measurement sets Set Bn (1<=n<=N), and the one or more first sets, namely Set B₁, Set B₂, ..., Set B_{N}, include measurement resources of a first number of first cells, namely the second measurement resources.

The one or more second sets may be marked as prediction sets Set An (1<=n<=M), and the one or more second sets, namely Set A₁, Set A₂, ..., Set A_{M}, include prediction resources of a second number of third cells, and the second cell is one cell among the third cells.

It can be understood that the second cell(s) corresponding to the one or more first prediction results belong(s) to the second number of third cells corresponding to the one or more second sets, where the second cell(s) corresponding to the first prediction information includes some or all of the second number of third cells, that is, the second cell(s) corresponding to the one or more first prediction results should be selected from the third cells corresponding to the prediction sets Set Am (1<=m<=M).

In some embodiments, one or more first cells correspond to one first set.

It can be understood that one first set includes second measurement resources of one or more first cells, where one first cell includes one or more second measurement resources, and one second prediction resource corresponds to one spatial filter of the first cell.

In some embodiments, one or more third cells correspond to one second set.

It can be understood that one second set includes prediction resources of one or more third cells, where one third cell includes one or more prediction resources, and one prediction resource corresponds to one spatial filter of the third cell.

In some embodiments, a relationship between the second measurement resources included in the one or more first sets and the prediction resources included in the one or more second sets includes one of the following:
Relationship 1: No same resource exists between the second measurement resources included in the first set and the prediction resources included in the second set.

Relationship 2: One first cell corresponds to one first set and one second set, and the first set is a subset of the second set.

In Relationship 1, the second measurement resources and the prediction resources have no same resources.

In an example, the second measurement resources are wide beams based on SSB (small quantity), and the prediction resources are narrow beams based on CSI-RS (large quantity).

In Relationship 2, for the first set and the third set corresponding to the same cell, the first set is a subset of the third set, that is, measurement resources corresponding to one cell are a subset of corresponding prediction resources.

In an example, the first set corresponding to one cell includes 8 measurement resources, corresponding to 8 spatial filters, and the second set corresponding to the cell includes 64 prediction resources, corresponding to 64 beams.

In this embodiment of the present disclosure, the measurement resources corresponding to one cell are a subset of the prediction resources corresponding to the cell, which can reduce measurement overhead and time delay.

In some embodiments, one third cell corresponds to one second set and has no corresponding first set.

For the third cell, there is no corresponding second measurement resource, so a measurement result of the third cell can only be predicted based on measurement results of the first cell(s), i.e., other cell(s).

In some embodiments, the first configuration information is further arranged to configure one or more of the following:
a third mobility event, where the third mobility event is a mobility event predicted by using the one or more first measurement results; and/or
first uplink resources or second uplink resources, where the first uplink resources are used for reporting of a second mobility event(s), the second uplink resources are used for transmitting a first request, the first request is arranged to request the first uplink resources, and the second mobility event(s) is/are a first mobility event(s) being reported included in the first prediction information.

The third mobility event is a mobility event that can be predicted based on one or more first measurement results.

The first uplink resources are resources for the terminal device to report the second mobility event(s). The second uplink resources are resources used by the terminal device when requesting the first uplink resources.

It can be understood that if the first configuration information configures the first uplink resources, the terminal device reports the second mobility event(s) based on the first uplink resources configured by the first configuration information. If the first configuration information does not configure the first uplink resources, the terminal device sends a first request based on the second uplink resources configured by the first configuration information, to request the network device to schedule the first uplink resources for the terminal device. The first request may be a scheduling request (SR).

After receiving the first request, the network device may send uplink scheduling Downlink Control Information (DCI) to the terminal device, where the uplink scheduling DCI is arranged to schedule the first uplink resources.

In some embodiments, based on FIG. 4, FIG. 5, FIG. 7 or FIG. 9, an embodiment of the present disclosure provides a wireless communication method. As shown in FIG. 11, the method includes the following operations.

At S1101, the terminal device sends fourth information to the network device, where the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, where the one or more fourth mobility events are mobility event(s) supported to be predicted by the one or more first measurement results;
a first number, where the first number is the number of first cells supported by the terminal device on one carrier;
a second number, where the second number is the number of first sets supported by the terminal device on one carrier, and one first set includes second measurement resources corresponding to one or more first cells; and/or
a third number, where the third number is the number of second sets supported by the terminal device on one carrier, the second sets are arranged to configure prediction resources of third cells, and the third cells are cells corresponding to prediction results predicted by using the one or more first measurement results.

In some embodiments, based on FIG. 6, FIG. 8 or FIG. 10, an embodiment of the present disclosure provides a wireless communication method applied to a network device. As shown in FIG. 11, the method includes the following operations.

At S1101, the network device receives fourth information sent by the terminal device, where the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, where the fourth mobility events are mobility events supported to be predicted by the terminal device;
a first number, where the first number is the number of first cells supported by the terminal device on one carrier;
a second number, where the second number is the number of first sets supported by the terminal device on one carrier, and one first set includes second measurement resources corresponding to one or more first cells; and/or
a third number, where the third number is the number of second sets supported by the terminal device on one carrier, the second sets are arranged to configure prediction resources of third cells, and the third cells are cells corresponding to prediction results predicted by using the one or more first measurement results.

In this embodiment of the present disclosure, the terminal device reports, to the network device based on the fourth information, supported measurement and prediction capabilities of the terminal device, where the measurement and prediction capabilities may include cell-level and/or spatial filter-level capabilities.

The first mobility event(s), the second mobility event(s), the third mobility event(s), and the one or more fourth mobility events are described here:
The one or more first mobility events are mobility events predicted by the terminal device based on one or more first measurement results;
The second mobility event(s) is/are a reported mobility event(s) predicted by the terminal device based on one or more first measurement results;
The third mobility event(s) is/are a mobility event(s) configured by the network device and predictable by the terminal device based on one or more first measurement results;
The one or more fourth mobility events are a mobility event(s) supported to be predicted by the terminal device.

Optionally, the fourth information includes fifth indication information, where the fifth indication information is arranged to indicate whether the terminal device supports measurement of the one or more first measurement results and/or supports prediction of the first prediction information based on the one or more first measurement results. If the fourth indication information indicates that the terminal device supports measurement of the one or more first measurement results and supports prediction of the first prediction information based on the one or more first measurement results, the fourth information is arranged to indicate other content, or the fourth information does not include the fourth indication information. Under the condition of indicating other content, the terminal device is determined by default to support measurement of the one or more first measurement results and support prediction of the first prediction information based on the one or more first measurement results.

In this embodiment of the present disclosure, after receiving the fourth information, the network device may configure the first set and/or the second set based on the fourth information.

An embodiment of the present disclosure provides a wireless communication method, applied to a terminal device. As shown in FIG. 12, the method includes the following operations.

At S1201, a terminal device sends one or more first measurement results to a network device, where the first measurement results are measurement results obtained by measuring a first cell; the one or more first measurement results are arranged to predict first prediction information, the first prediction information is associated with one or more first prediction results, and the first prediction results are measurement results of a second cell predicted based on the one or more first measurement results.

An embodiment of the present disclosure provides a wireless communication method, applied to a terminal device. As shown in FIG. 13, the method includes the following operations.

At S1301, a network device receives one or more first measurement results sent by a terminal device, where the first measurement results are measurement results obtained by measuring one or more first cells.

At S1302, the network device predicts first prediction information based on the one or more first measurement results, where the first prediction information is associated with one or more first prediction results, and the one or more first prediction results is/are measurement results of a second cell(s) predicted based on the one or more first measurement results.

The terminal device measures a first number of first cell(s) to obtain measurement results of each first cell in the first number of first cell(s), i.e., obtain the first number of first measurement results. The first number is an integer greater than or equal to 1.

It may be understood that, for one first cell, the terminal device measures one or more spatial filters corresponding to the first cell, and obtains a measurement result of the first cell based on respective measurement results of the spatial filters.

For one first cell, the terminal device measures the first cell through one or more measurement resources of the first cell. It may be understood that one measurement resource corresponds to one spatial filter.

The one or more first measurement results in the embodiment of the present disclosure may be measurement results obtained by performing Layer 1 measurement on the first cell, and the one or more first measurement results may include one or more of: L1-RSRP, L1-RSRQ, L1-RSSI, L1-SINR, and SNR.

The measurement resources of the first cell may be CSI-RS resources and/or SSB resources.

After determining the first number of first measurement results, the terminal device reports the first number of first measurement results to the network device, so that the network device predicts the first prediction information according to the first number of first measurement results.

The first number of first measurement results may be reported to the network device through uplink signaling. In some embodiments, the uplink signaling is reported in Uplink Control Information (UCI) of a physical layer in a form of spatial filter reporting. The UCI may be carried in a PUCCH or a Physical Uplink Shared Channel (PUSCH). The uplink signaling may also be a MAC CE or RRC signaling.

After receiving the first number of first measurement results, the network device predicts the first prediction information based on the first number of first measurement results. The first prediction information is associated with first prediction result(s). It may be understood that the first prediction information is determined based on the one or more first prediction results.

The one or more first prediction results are measurement results of a second cell predicted based on the first number of first measurement results. The first number of first measurement results may predict one or more first prediction results, and different first prediction results among the multiple first prediction results correspond to different second cells. It may be understood that the one or more first prediction results is/are measurement results of the second cell, but the one or more first prediction results are not measurement results obtained by measuring the second cell, but measurement results predicted or inferred based on the first number of first measurement results.

It may be understood that the second cell(s) belong(s) to the first number of first cells or does not belong to the first number of first cells.

In some embodiments, a second prediction model is deployed in the network device, and the second prediction model may be expressed as various models such as a function, a deep learning model, or a neural network model. The network device inputs the first number of first measurement results into the second prediction model to obtain first prediction information output by the first prediction model.

It may be understood that the first prediction model and the second prediction model are prediction models deployed at a terminal device side and a network device side respectively, and structures of the first prediction model and the second prediction model are the same or different.

In the wireless communication method provided in the embodiment of the present disclosure, the terminal device measures a first number of first measurement results and reports the measurement results to the network device, and the network device determines first prediction information associated with predicted measurement results of one or more second cells based on the one or more first measurement results, thereby obtaining the first prediction information without measuring the one or more second cells and reducing overhead of reference signals used for cell measurement.

In some embodiments, the first prediction information includes one or more of the following:
first indication information, where the first indication information is arranged to indicate whether one or more first mobility events occur, the first mobility event(s) being associated with the one or more first prediction results;
second indication information, where the second indication information is arranged to indicate an event type(s) of the occurred first mobility event(s); and/or
first information, where the first information indicates a first prediction result(s) corresponding to the occurred first mobility event(s).

In the embodiments of the present disclosure, the first indication information may be arranged to indicate whether one or more first mobility events occur in the terminal device.

It may be understood that different values of the first indication information are arranged to indicate that one or more first mobility events occur, or that no first mobility event occurs.

In some embodiments, the one or more first mobility events are predefined mobility events. In this case, the first indication information is arranged to indicate whether the predefined mobility event(s) occur(s).

If a first mobility event occurs, the second indication information is arranged to indicate which first mobility event occurs. It may be understood that if multiple first mobility events occur, the first prediction information includes multiple pieces of second indication information, and different pieces of second indication information indicate event type(s) of different first mobility events.

The first information is arranged to indicate a first prediction result(s) corresponding to the occurred first mobility event(s).

In some embodiments, the one or more first mobility events include one or more of the following first events:
first event A: the one or more second cells corresponding to the one or more first mobility events include a serving cell, and link performance of the serving cell measured and/or predicted based on Layer 1 is better than a first threshold;
first event B: the one or more second cells include a serving cell, and link performance of the serving cell measured and/or predicted based on Layer 1 is worse than a second threshold;
first event C: the one or more second cells include a candidate cell and a serving cell, and link performance of the candidate cell measured and/or predicted based on Layer 1 is better than first link performance, where the first link performance is link performance of the serving cell plus a first offset;
first event D: the one or more second cells include a candidate cell, and link performance of the candidate cell measured and/or predicted based on Layer 1 is better than a third threshold;
first event E: the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
first event F: the one or more second cells include a candidate cell, and interference of the candidate cell measured and/or predicted based on Layer 1 is stronger than a first interference threshold.

It may be understood that the first event is a cell-level mobility event related to link performance of a serving cell and/or link performance of a candidate cell.

The one or more first mobility events predicted by the network device based on the one or more first measurement results include one or more of first event A to first event F.

For threshold values such as the first threshold to the fifth threshold and the first interference threshold involved in first event A to first event F, values of different threshold values may be the same or different.

In the embodiments of the present disclosure, link performance of a cell may be represented by one or more of parameters characterizing link quality of the cell, including L1-RSRP, L1-RSRQ, L1-RSSI, L1-SINR and SNR of the cell.

It may be understood that if a second cell has both a first measurement result and a first prediction result, the network device may determine whether a first mobility event occurs in the second cell according to the first measurement result and/or the first prediction result of the second cell. Optionally, the network device determines whether a first mobility event occurs in the second cell according to the first measurement result of the second cell. Optionally, the network device determines whether a first mobility event occurs in the second cell according to the first prediction result of the second cell. Optionally, the network device determines whether a first mobility event occurs in the second cell according to a result with better link performance between the first measurement result and the first prediction result of the second cell.

In some embodiments, the one or more first mobility events include one or more of the following second events:
second event A: the one or more second cells corresponding to the one or more first mobility events include a serving cell, and performance of a serving spatial filter of the serving cell measured and/or predicted based on Layer 1 is better than a sixth threshold;
second event B: the one or more second cells include a serving cell, and performance of a serving spatial filter of the serving cell measured and/or predicted based on Layer 1 is worse than a seventh threshold;
second event C: the one or more second cells include a candidate cell and a serving cell, and performance of a candidate spatial filter of the candidate cell measured and/or predicted based on Layer 1 is better than second link performance, where the second link performance is performance of a serving spatial filter of the serving cell plus a second offset;
second event D: the one or more second cells include a candidate cell, and performance of a candidate spatial filter of the candidate cell measured and/or predicted based on Layer 1 is better than an eighth threshold;
second event E: the one or more second cells include a candidate cell, performance of a serving spatial filter of a serving cell measured and/or predicted based on Layer 1 is worse than a ninth threshold, and performance of a candidate spatial filter of the candidate cell measured and/or predicted based on Layer 1 is better than a tenth threshold; and/or
second event F: the one or more second cells include a candidate cell, and interference of a candidate beam of the candidate cell measured and/or predicted based on Layer 1 is stronger than a second interference threshold.

In the embodiments of the present disclosure, the second event is a spatial filter-level mobility event related to performance of a serving spatial filter and/or performance of a candidate spatial filter.

It may be understood that spatial filters of a serving cell are classified into a serving spatial filter and a candidate spatial filter, and a spatial filter of a candidate cell is a candidate spatial filter.

The one or more first mobility events predicted by the network device based on the one or more first measurement results include one or more of second event A to second event F.

For threshold values such as the sixth threshold to the tenth threshold and the second interference threshold involved in second event A to second event F, values of different threshold values may be the same or different.

In the embodiments of the present disclosure, performance of a spatial filter may be represented by one or more of parameters characterizing link quality of the spatial filter, including L1-RSRP, L1-RSRQ, L1-RSSI, L1-SINR and SNR of the spatial filter.

In the embodiments of the present disclosure, the first mobility event(s) determined by the network device based on the one or more first measurement results may be a cell-level mobility event(s) or a spatial filter-level mobility event(s).

If the network device determines multiple first mobility events based on the one or more first measurement results, the multiple first mobility events may all be cell-level mobility events, all be spatial filter-level mobility events, or partly be cell-level mobility events and partly be beam-level mobility events.

In an example, if first event A occurs, the first prediction information includes at least one of the following pieces of information:
first indication information with a first value, where the first indication information with the first value indicates that a first mobility event occurs;
an event type of first event A;
first information corresponding to first event A.

In an example, if first event A and second event B occur, the first prediction information includes at least one of the following pieces of information:
first indication information with a first value;
an event type of first event A and an event type of second event B;
first information corresponding to first event A and first information corresponding to second event B.

In an example, if no first mobility event occurs, the first prediction information includes at least one of the following pieces of information:
first indication information with a second value, where the first indication information with the second value indicates that no first mobility event occurs.

In some embodiments, the first information includes one or more of the following:
a cell index and/or cell link quality; and/or
cell link quality and/or spatial filter link quality.

It may be understood that if the occurred first mobility event(s) include(s) a cell-level first mobility event, the first information corresponding to the first mobility event(s) include(s) cell information corresponding to the first mobility event(s), where the cell information includes: an index of the cell and/or link quality of the cell.

If the occurred cell-level first mobility event is related to a serving cell, the first information includes an index of the serving cell and link quality of the serving cell. In an example, if the occurred first mobility event(s) include(s) first event A, the first information includes an index of the serving cell and/or link quality of the serving cell.

If the occurred cell-level first mobility event is related to a candidate cell, the first information includes an index of the candidate cell and link quality of the candidate cell. In an example, if the occurred first mobility event(s) include(s) first event D, the first information includes an index of the candidate cell and/or link quality of the candidate cell.

If the occurred cell-level first mobility event is related to a serving cell and a candidate cell, the first information includes an index of the serving cell and/or link quality of the serving cell, as well as an index of the candidate cell and/or link quality of the candidate cell. In an example, if the occurred first mobility event(s) include(s) first event A and first event D, the first information includes: an index of the serving cell and/or link quality of the serving cell; and an index of the candidate cell and/or link quality of the candidate cell.

It may be understood that if the occurred first mobility event(s) include(s) a spatial filter-level first mobility event, the first information corresponding to the first mobility event(s) includes cell information and/or spatial filter information corresponding to the first mobility event(s), where the cell information includes: a cell index and/or cell link quality, and the spatial filter information includes: an index of a spatial filter and/or link quality of a spatial filter.

If the occurred spatial filter-level first mobility event is related to a serving spatial filter, the cell information included in the first information is information of a serving cell, and the spatial filter information included in the first information is information of a serving spatial filter, i.e., the first information includes: an index of the serving cell and/or link quality of the serving cell, and/or an index of the serving spatial filter and/or link quality of the serving spatial filter.

In an example, if the occurred first mobility event(s) include(s) second event A, the first information includes an index of the serving spatial filter and/or link quality of the serving spatial filter.

In an example, if the occurred first mobility event(s) include(s) second event A, the first information includes an index of the serving cell and/or link quality of the serving cell.

In an example, if the occurred first mobility event(s) include(s) second event A, the first information includes an index of the serving cell and/or link quality of the serving cell, as well as an index of the serving spatial filter and/or link quality of the serving spatial filter.

If the occurred spatial filter-level first mobility event is related to a candidate spatial filter, the cell information included in the first information is information of a candidate cell, and the spatial filter information included in the first information is information of a candidate spatial filter, i.e., the first information includes: an index of the candidate cell and/or link quality of the candidate cell, and/or an index of the candidate spatial filter and/or link quality of the candidate spatial filter.

In an example, if the occurred first mobility event(s) include(s) second event D, the first information includes: an index of the candidate spatial filter and/or link quality of the candidate spatial filter.

In an example, if the occurred first mobility event(s) include(s) second event D, the first information includes: an index of the candidate cell and/or link quality of the candidate cell.

In an example, if the occurred first mobility event(s) include(s) second event D, the first information includes: an index of the candidate cell and/or link quality of the candidate cell, as well as an index of the candidate spatial filter and/or link quality of the candidate spatial filter.

If the occurred spatial filter-level first mobility event is related to a serving spatial filter and a candidate spatial filter, the cell information included in the first information includes information of a serving cell and information of a candidate cell, and the spatial filter information included in the first information includes information of a serving spatial filter and information of a candidate spatial filter, i.e., the first information includes:
an index of the serving cell and/or link quality of the serving cell, and/or an index of the serving spatial filter and/or link quality of the serving spatial filter;
and an index of the candidate cell and/or link quality of the candidate cell, and/or an index of the candidate spatial filter and/or link quality of the candidate spatial filter.

In the embodiments of the present disclosure, if the occurred first mobility event(s) include(s) a cell-level first mobility event and a spatial filter-level first mobility event, the first information corresponding to the cell-level first mobility event includes cell information, and the first information corresponding to the spatial filter-level first mobility event includes spatial filter information.

In some embodiments, a transmission manner of the multiple first measurement results includes one of the following:
First transmission manner: transmission in a first order, where the first order is a sequence of pre-configured or predefined first sets, and one first set includes second measurement resources corresponding to one or more first cells;
Second transmission manner: transmission in the first order and a second order, where the second order is a sequence of second measurement resources in the first set.

In the embodiments of the present disclosure, the terminal device may report the multiple first measurement results based on the first transmission manner or the second transmission manner.

In the first transmission manner, the terminal device performs reporting in a sequence of pre-configured or arranged first sets, and the network device determines a first set corresponding to a received measurement result according to the sequence of the pre-configured or arranged first sets. In an example, the first order is Set B₁, Set B₂, ..., Set Bₙ, and the terminal device first reports measurement results of measurement resources in Set B₁, then reports measurement results of measurement resources in Set B₂, and finally reporting measurement results of measurement resources in Set B_{N}. The measurement results received by the network device are: measurement results of measurement resources in Set B₁, measurement results of measurement resources in Set B₂, ..., measurement results of measurement resources in Set B_{N}.

When the multiple first measurement results are transmitted in the first order, each first measurement result includes a resource index and link quality, and may not include an index of Set Bₙ.

When the multiple first measurement results are transmitted according to the first order, reporting of the index of Set Bₙ is avoided, reporting overhead is reduced, and thus more resource indexes and corresponding link quality can be reported.

In the second transmission manner, the terminal device performs transmission not only in a sequence of pre-configured or arranged first sets Set Bₙ, but also performs reporting for each first set according to a sequence of measurement resources in the first set. Then the network device determines a first set corresponding to a received measurement result according to the sequence of the pre-configured or arranged first sets, and for each first set, further determines a measurement resource corresponding to the received measurement result according to the sequence of measurement resources in the first set. In an example, the first order is Set B₁, Set B₂, ..., Set Bₙ, and the terminal device first reports measurement results of measurement resources in Set B₁, then reports measurement results of measurement resources in Set B₂, and finally reporting measurement results of measurement resources in Set B_{N}. For Set Bₙ, there are 16 resources in Set Bₙ, and link quality corresponding to the 16 measurement resources can be reported according to a specific resource sequence. The second order may be a sequence of measurement resources in the first set in descending or ascending order of resource indexes.

When the multiple first measurement results are transmitted in the first order, each first measurement result includes link quality, and may not include an index of Set Bₙ and a resource index.

When the multiple first measurement results are transmitted according to the first order and the second order, reporting overhead occupied by resource indexes can be further saved.

It may be understood that the measurement resources are configured by the network device, so the network device can determine a resource index corresponding to the reported link quality and an index of the first set.

In some embodiments, the transmission manner of the multiple first measurement results includes:
Third transmission manner: transmission based on reporting instances, where one reporting instance includes multiple spatial filter reporting instances.

In a case where the terminal device reports the multiple first measurement results according to the third transmission manner, the multiple reported first measurement results are divided into multiple reporting instances, one reporting instance includes multiple spatial filter reporting instances, and a network side concatenates the multiple spatial filter reporting instances to obtain one reporting instance, and completes reception of the multiple first measurement results through reception of the multiple reporting instances.

A spatial filter reporting instance may include link quality of a spatial filter. The measurement results are placed in the spatial filter reporting instance, and are sent from the terminal device to the network device through an uplink control channel or a data channel.

In the embodiments of the present disclosure, the first transmission manner and the second transmission manner increase capacity of reported content by reducing reported content, and the third transmission manner may be used in combination with the first transmission manner or the second transmission manner.

In some embodiments, the reporting instance includes fourth indication information, where the fourth indication information is arranged to indicate a sequence of multiple spatial filter reporting instances included in the reporting instance.

The terminal device informs the network device, in the reported reporting instance, which spatial filter reporting instances are sequentially used in the current reporting instance to report the multiple first measurement results.

In some embodiments, the multiple spatial filter reporting instances included in the reporting instance are configured by the network device.

The network device may inform the terminal device, through pre-configuration or indication, which (more than one) spatial filter reporting instances are arranged to report the multiple first measurement results.

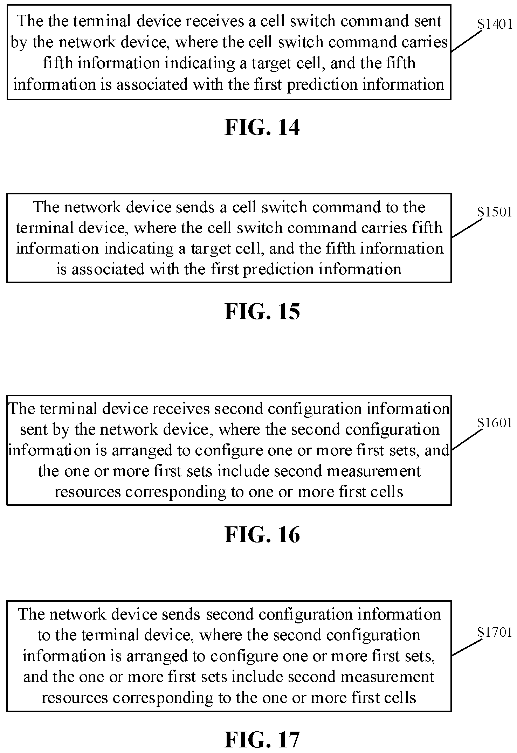

In some embodiments, based on FIG. 12, an embodiment of the present disclosure provides a wireless communication method. As shown in FIG. 14, the method includes the following operations.

At S1401, the terminal device receives a cell switch command sent by the network device, where the cell switch command carries fifth information indicating a target cell, and the fifth information is associated with the first prediction information.

In some embodiments, based on FIG. 13, an embodiment of the present disclosure provides a wireless communication method. As shown in FIG. 15, the method includes the following operations.

At S1501, the network device sends a cell switch command to the terminal device, where the cell switch command carries fifth information indicating a target cell, and the fifth information is associated with the first prediction information.

The network device determines that a first mobility event occurs in the terminal device based on the first prediction result, determines the fifth information based on the occurred first mobility event or not based on the occurred first mobility event, and sends the fifth information to the terminal device. The fifth information is arranged to indicate the target cell.

Optionally, the network device sends the fifth information to the terminal device through a cell switch command (CSC).

Optionally, the cell switch command itself is carried by a MAC CE, and the MAC CE includes a TCI state ID and a candidate cell index, where the TCI state ID is arranged to indicate a candidate beam, and the candidate cell index is arranged to indicate the target cell.

After receiving the cell switch command from the network device, the terminal device completes a cell handover operation of handing over to the target cell within a certain period of time.

In the embodiments of the present disclosure, the target cell indicated by the fifth information may belong to the first cell or may not belong to the first cell(s). It may be understood that if the target cell belongs to the first cell(s), the terminal device has measured the target cell; and if the target cell does not belong to the first cell(s), the terminal device has not measured the target cell.

In some embodiments, if the target cell does not belong to the first cell(s), the fifth information is further arranged to indicate first measurement resources, where the first measurement resources are used for measurement of the target cell and/or reporting of measurement results.

In a case where the target cell indicated by the fifth information is a cell that the terminal device has not previously measured, the cell switch command may indicate a group of measurement resources, i.e., first measurement resources, and the terminal device may complete measurement and/or reporting of the target cell and/or target beam through the first measurement resources. The first measurement resources may include a group of CSI-RS resources and/or SSB resources.

In an example, the terminal device may complete downlink synchronization through measurement of SSB resources in the first measurement resources, and adjust a downlink receive spatial filter.

In an example, the terminal device may perform time and frequency tracking through measurement of CSI-RS of the target cell, or acquire CSI information of the cell in advance and feed it back to the network device.

In some embodiments, based on FIG. 12 or 14, an embodiment of the present disclosure provides a wireless communication method. As shown in FIG. 16, the method includes the following operations.

At S1601, the terminal device receives second configuration information sent by the network device, where the second configuration information is arranged to configure one or more first sets, and the one or more first sets include second measurement resources corresponding to one or more first cells.

In some embodiments, based on FIG. 13 or 15, an embodiment of the present disclosure provides a wireless communication method. As shown in FIG. 17, the method includes the following operations.

At S1701, the network device sends second configuration information to the terminal device, where the second configuration information is arranged to configure one or more first sets, and the one or more first sets include second measurement resources corresponding to one or more first cells.

The one or more first sets may be marked as measurement sets Set Bₙ (1<=n<=N), and the one or more first sets, i.e., Set B₁, Set B₂, ..., Set B_{N}, include measurement resources of a first number of first cell(s), i.e., second measurement resources.

In some embodiments, one or more first cells correspond to one first set.

It may be understood that one first set includes second measurement resources of one or more first cells, where one first cell includes one or more second measurement resources, and one second prediction resource corresponds to one spatial filter of the first cell.

In some embodiments, the second configuration information is further arranged to configure third uplink resources, where the third uplink resources are used for transmission of the one or more first measurement results.

The third uplink resources are resources for the terminal device to report the first measurement results.

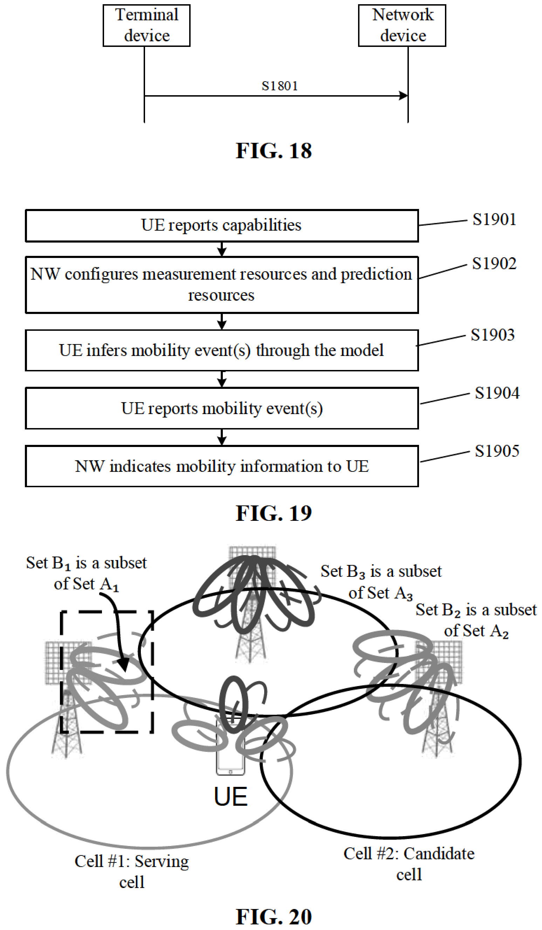

In some embodiments, based on FIG. 12, FIG. 14 or FIG. 16, an embodiment of the present disclosure provides a wireless communication method. As shown in FIG. 18, the method includes the following operations.

At S1801, the terminal device sends sixth information to the network device, where the sixth information is arranged to indicate one or more of the following capabilities of the terminal device:
whether the terminal device supports measurement of the one or more first measurement results;
a first number, where the first number is a number of first cells supported by the terminal device on one carrier; and/or
a second number, where the second number is a number of first sets supported by the terminal device on one carrier, and one first set includes second measurement resources corresponding to one or more first cells.

In some embodiments, based on FIG. 13, FIG. 15 or FIG. 17, an embodiment of the present disclosure provides a wireless communication method. As shown in FIG. 18, the method includes the following operations.

At S1801, the network device receives sixth information sent by the terminal device, where the sixth information is arranged to indicate one or more of the following capabilities of the terminal device:
whether the terminal device supports measurement of the one or more first measurement results;
a first number, where the first number is a number of first cells supported by the terminal device on one carrier; and/or
a second number, where the second number is a number of first sets supported by the terminal device on one carrier, and one first set includes second measurement resources corresponding to one or more first cells.

In the embodiments of the present disclosure, the terminal device reports, to the network device based on the sixth information, measurement capabilities supported by the terminal device, where the measurement capabilities may include cell-level and/or spatial filter-level capabilities.

Optionally, the sixth information includes sixth indication information, where the sixth indication information is arranged to indicate whether the terminal device supports measurement of the one or more first measurement results. If the sixth indication information indicates that the terminal device supports measurement of the one or more first measurement results, the sixth information is arranged to indicate other content; or the sixth information does not include the sixth indication information. In the case of indicating other content, the terminal device is determined by default to support measurement of the one or more first measurement results.

In the embodiments of the present disclosure, after receiving the sixth information, the network device may configure the first set based on the sixth information.

The wireless communication method provided in the embodiments of the present disclosure is further described below.

A mobility event triggered by Layer 1/Layer 2 measurement is defined in consideration of Layer 1 Radio Resource Management (RRM) measurement behavior of a UE.

The events are classified into beam-level events and cell-level events.

It should be noted that a cell-level measurement result is calculated on the basis of a beam-level measurement result. For example, for cell-level L1-RSRQ, when the UE measures N beams in a candidate cell (based on Channel State Information-Reference Signal (CSI-RS) resources and/or SSB resources), the number of resources with L1-RSRP greater than a certain RSRP threshold is S. Then linear averaging is performed on the S L1-RSRP values to obtain an averaged cell-level L1-RSRP.

In some embodiments, cell-level predicted mobility events are defined as follows:
a. Link performance of a serving cell measured and/or predicted based on Layer 1 is better than a specific threshold;
b. Link performance of a serving cell measured and/or predicted based on Layer 1 is worse than a specific threshold;
c. Link performance of a candidate cell measured and/or predicted based on Layer 1 is better than that of a current serving cell (including PCell and SCell) plus an offset;
d. Link performance of a candidate cell measured and/or predicted based on Layer 1 is better than a specific threshold;
e. Link performance of a serving cell measured and/or predicted based on Layer 1 is worse than a specific threshold, and link performance of a candidate cell measured and/or predicted based on Layer 1 is better than a specific threshold;
f. Interference of a candidate cell measured and/or predicted based on Layer 1 is stronger than a certain threshold for the UE.

Events a to f belong to cell-level second events.

For different events, the terminal device may be triggered to perform the same or different actions.

In an example, for the terminal device, actions triggered by each of events a to f are as follows:
For event a, the UE does not need to report the event, and keeps measuring the event;
For event b, the UE may report the event, including an index of a serving cell and/or link quality of the serving cell; where the NW may subsequently indicate the UE to hand over to a candidate cell (for cell handover, the candidate cell may also be referred to as a target cell);
For event c, the UE may report the event, including an index of a candidate cell, and/or link quality of the candidate cell, and/or an index of a serving cell, and/or link quality of the serving cell; where the NW may subsequently indicate the UE to hand over to the candidate cell;
For event d, the UE may report the event, including an index of a candidate cell and/or link quality of the candidate cell, where the NW may subsequently indicate the UE to hand over to the candidate cell;
For event e, the UE may report the event, including an index of a candidate cell, and/or link quality of the candidate cell, and/or an index of a serving cell, and/or link quality of the serving cell; where the NW may subsequently indicate the UE to hand over to the candidate cell;
For event f, the UE may report the event, including an index of a candidate cell, and/or intensity of interference of the candidate cell to a serving cell of the UE, where the NW may subsequently adjust transmit power of a beam used by the candidate cell to reduce interference or avoid using the interfering beam and scheduling the interfered UE at the same time.

Beam-level predicted mobility events are defined as follows:
1. Performance of a serving beam of a serving cell measured and/or predicted based on Layer 1 is better than a specific threshold;
2. Performance of a serving beam of a serving cell measured and/or predicted based on Layer 1 is worse than a specific threshold;
3. Performance of a candidate beam of a candidate cell measured and/or predicted based on Layer 1 is better than performance of a serving beam of a current serving cell (including PCell and SCell) plus an offset;
4. Performance of a candidate beam of a candidate cell measured and/or predicted based on Layer 1 is better than a specific threshold;
5. Performance of a serving beam of a serving cell measured and/or predicted based on Layer 1 is worse than a specific threshold, and performance of a candidate beam of a candidate cell measured and/or predicted based on Layer 1 is better than a specific threshold;
6. Interference of a candidate beam of a candidate cell measured and/or predicted based on Layer 1 is stronger than a certain threshold for the UE.

Events 1 to 6 belong to beam-level second events.

In an example, for the terminal device, actions triggered by each of events 1 to 6 are as follows:
For event 1, the UE does not need to report the event, and keeps measuring the event;
For event 2, the UE may report the event, including an index of a serving cell, and/or link quality of the serving cell, and/or an index of a serving beam, and/or link quality of the serving beam, where the NW may subsequently indicate the UE to switch a current serving beam to another beam (the beam may come from the current serving cell or a candidate cell);
For event 3, the UE may report the event, including an index of a candidate cell, and/or link quality of the candidate cell, and/or an index of a candidate beam, and/or link quality of the candidate beam; and/or an index of a serving cell, and/or link quality of the serving cell, and/or an index of a serving beam, and/or link quality of the serving beam, where the NW may subsequently indicate the UE to switch a current serving beam to another beam (the beam may come from the current serving cell or a candidate cell);
For event 4, the UE may report the event, including an index of a candidate cell, and/or link quality of the candidate cell, and/or an index of a candidate beam, and/or link quality of the candidate beam, where the NW may subsequently indicate the UE to hand over to the candidate beam in the candidate cell;
For event 5, the UE may report the event, including an index of a candidate cell, and/or link quality of the candidate cell, and/or an index of a candidate beam, and/or link quality of the candidate beam; and/or an index of a serving cell, and/or link quality of the serving cell, and/or an index of a serving beam, and/or link quality of the serving beam, where the NW may subsequently indicate the UE to switch a current serving beam to another beam (the beam may come from the current serving cell or a candidate cell);
For event 6, the UE may report the event, including an index of a candidate cell, and/or a candidate beam, and/or intensity of interference of the candidate beam to a serving beam of the UE, where the NW may subsequently adjust transmit power of a beam used by the candidate cell to reduce interference or avoid using the interfering beam and scheduling the interfered UE at the same time.

It should be noted that in some embodiments, an indicator for measuring cell-level or beam-level performance is L1-RSRP. In other embodiments, it may also be L1-RSRQ, L1-RSSI, L1-SINR, SNR, or a combination of multiple indicators.

The UE compares the preset mobility event with a prediction result of the model to determine whether a Layer 1/Layer 2 mobility event occurs.

The wireless communication method provided in the embodiments of the present disclosure includes, but is not limited to, the following Embodiment 1 and Embodiment 2.

### Embodiment 1: Mobility Event Prediction with Model Deployed at the UE Side

If the model is deployed at the UE side, the wireless communication method provided in the embodiments of the present disclosure, as shown in FIG. 19, includes S1901 to S1905.

At S1901, the UE reports its capability.

The UE reports its measurement and prediction capabilities for supported mobility events (including cell-level and beam-level events). Specifically, the UE first informs the NW whether the UE supports spatial-domain measurement and/or prediction of mobility events. If it is supported by the UE capability, the UE shall further report one or more combinations of the following information for subsequent configuration by the NW. The UE capabilities include, but are not limited to:
Information 1: On one carrier, which type of mobility event prediction is supported by the model at the UE side;
Information 2: On one carrier, the maximum number of candidate cells that the UE supports to measure;
In some embodiments, one candidate cell corresponds to one measurement set; in other embodiments, multiple candidate cells correspond to one measurement set, i.e., downlink reference signal resources from multiple candidate cells (including serving cells) are configured into one measurement set.

In some embodiments, on one carrier, the maximum number of measurement sets that the UE supports to measure. Within each measurement set, the maximum number of downlink measurement resources (such as CSI-RS resources and/or SSB resources) to be measured.

Information 3: On one carrier, the maximum number of prediction sets that the UE supports to predict.

In some embodiments, one candidate cell corresponds to one prediction set; in other embodiments, multiple candidate cells correspond to one prediction set.

Within each prediction set, the maximum number of downlink measurement resources (such as CSI-RS resources and/or SSB resources) to be predicted.

At S1902, the NW configures measurement resources and prediction resources.

According to the UE capability report, the NW performs resource configuration for the UE, including but not limited to the following resources:
The NW configures measurement sets Set Bₙ (1<=n<=N) and prediction sets Set Aₘ (1<=m<=M) of candidate cells (including serving cells) for the UE.

In an example, as shown in FIG. 20, the serving cell of the UE is Cell #1, and the candidate cells include Cell #2 and Cell #3. The NW configures one or more predictable LTM event types for the UE, such as cell-level LTM events A, B, C, etc. The measurement set and prediction set of Cell #1 are marked as SetB₁ and SetA₁ respectively, and SetB₁ is a subset of SetA₁; the measurement set and prediction set of Cell #2 are marked as SetB₂ and SetA₂ respectively, and SetB₂ is a subset of SetA₂; the measurement set and prediction set of Cell #3 are marked as SetB₃ and SetA₃ respectively, and SetB₃ is a subset of SetA₃.

In addition, the NW optionally configures some uplink resources (PUSCH or PUCCH) for the UE. When an event requiring reporting occurs, the uplink resources are arranged to carry reporting of model prediction events. In some embodiments, the NW configures PUCCH resources for the UE to request uplink resources, such as those arranged to carry Scheduling Request (SR).

In some embodiments, for cell-level mobility events, one candidate cell corresponds to one measurement set Set Bₙ (1<=n<=N), where N is the total number of candidate cell measurement sets. Each measurement set contains one or more downlink measurement resources of the candidate cell (including serving cell), i.e., CSI-RS resources and/or SSB resources. In addition, the prediction set Set Aₘ (1<=m<=M) may also contain one or more downlink measurement resources.

In the embodiments of the present disclosure, spatial-domain mobility event prediction is considered. In some embodiments, one candidate cell may correspond to one measurement set and one prediction set. Set Bₙ may be a subset of Set Aₘ. For example, there are 64 transmit beams in Set Aₘ, but only 8 transmit beams in Set Bₙ to reduce measurement overhead and delay.

In other embodiments, Set Bₙ and Set Aₘ may also be different, e.g., Set Bₙ contains wide beams based on SSB (small quantity), while Set Am contains narrow beams based on CSI-RS (large quantity).

In other embodiments, one candidate cell may correspond to only one prediction set but no corresponding measurement set. The model may take measurements of other candidate cells as input to infer cell-level and/or beam-level link quality and LTM mobility events of the candidate cell (without corresponding measurement set).

The configuration signaling used by the NW may be RRC signaling.

At S1903, the UE infers mobility events through the model.

After the UE completes measurement, i.e., measurement results of measurement sets Set Bₙ (1<=n<=N) are used as input to the model, and the model performs inference.

The prediction result includes one or more combinations of the following inferences. The inference result shall be selected from the prediction sets Set Aₘ (1<=m<=M).

Whether a mobility event configured, indicated or predefined by the NW occurs.

If a mobility event occurs, which mobility event occurs (i.e., event type) and other important event information:
Serving cell information and/or serving beam information and/or serving beam link quality corresponding to the event;
Candidate cell information and/or candidate beam information and/or candidate beam link quality corresponding to the event.

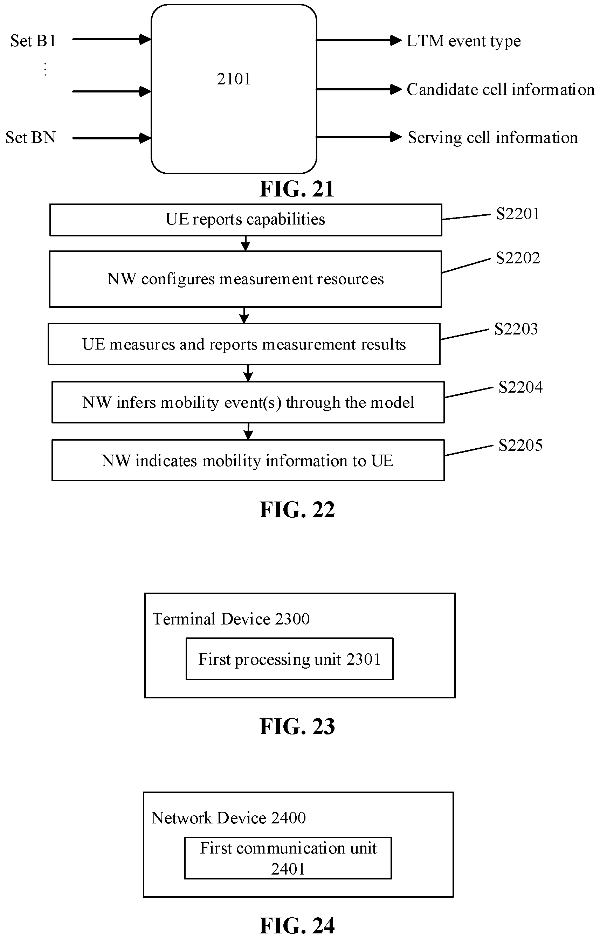

The relationship between input and output of the model 2101 may be shown in FIG. 21. The input of the model 2101 includes measurement results corresponding to each set from Set B₁ to Set B_{N}. The output of the model includes: LTM event type, candidate cell information and serving cell information. The candidate cell information includes: cell index of candidate cell and/or resource (beam) index and/or cell-level link quality and/or beam-level link quality. The serving cell information includes: cell index of serving cell and/or resource (beam) index and/or cell-level link quality and/or beam-level link quality. The model 2101 is an AI or ML model for LTM event prediction. The candidate cell or serving cell output by the model 2101 is a cell corresponding to Set Aₘ.

It should be noted that the model in the embodiments of the present disclosure may be DNN, CNN, RNN or other models.

For example, for cell-level mobility event prediction, the model outputs one or more of the following information:
event type c;
an Index of a candidate cell (better than current serving cell plus an offset);
link quality of the candidate cell (cell-level); and/or
link quality of a current serving cell (cell-level).

For example, for beam-level mobility event prediction, the model outputs one or more of the following information:
event type 5;
an Index of a candidate cell;
a candidate beam index of the candidate cell (represented by a resource index of a downlink reference signal);
link quality of the candidate cell (beam-level);
an index of a serving cell;
a serving beam index of the serving cell (represented by the resource index of the downlink reference signal);
link quality of the serving cell under the serving beam (beam-level); and/or

At S1904, the UE reports a mobility event(s).

For the prediction result of the AI/ML model, in some embodiments, the UE may independently decide whether to report the prediction result(s) of the mobility event(s). For example, when the model predicts that the current serving cell of the UE is better than a specific threshold (Event A) and still maintains an appropriate link state of the serving cell, the UE does not need to report or trigger subsequent LTM mobility operations.

In other embodiments, the UE reports the prediction result(s) of the mobility event(s) according to the configuration or indication of the NW or predefined in the protocol. For example, when the optimal cell output by the model is a candidate cell (different from the serving cell) and its performance is better than the current serving cell plus an offset (e.g., 6dB), the UE may determine that Event C occurs and report it. The offset is generally configured by the NW in advance or predefined in the protocol.

For reporting content of the predicted mobility event, the UE may report according to the model output. The reporting content may include at least one of the following information:
a type(s) of the mobility event(s) predicted to occur;
serving cell information corresponding to the event(s); where the serving cell information may include: a serving cell index, and/or serving beam information, and/or serving beam link quality;
candidate cell information corresponding to the event(s); where the candidate cell information may include: a candidate cell index, and/or candidate beam information, and/or candidate beam link quality.

For reporting of the predicted mobility event(s), the UE may use physical layer or higher-layer control signaling to carry the predicted mobility event(s). In some embodiments, when the model infers that a predefined mobility event occurs, the UE decides to report it. The reporting resource is, e.g., periodic PUCCH. The resource is configured to the UE by the NW in advance without resource request by the UE.

In other embodiments, the procedure may be described as:
1. The output of the UE-side model triggers a mobility event (e.g., link quality of a candidate cell is sufficiently better than the current serving cell, e.g., being greater than the current serving cell by a certain offset, e.g., L1-RSRP of 6dB);
2. The UE requests resources for reporting mobility prediction events, e.g., by sending a special Scheduling Request (SR) for AI/ML prediction to the NW;
3. The NW approves the reporting request of the UE, sends uplink scheduling DCI, and allocates uplink resources to the UE;
4. The UE performs the mobility-related reporting carried in the PUSCH scheduled by the NW.

In other embodiments, the reporting of the mobility event(s) may be included in a MAC CE at the MAC layer or mobility-related signaling at a higher layer (e.g., RRC layer).

At S1905, the NW indicates mobility information to the UE.

Here, the mobility information may be understood as third information. According to a Cell Switch Command (CSC), the NW may indicate the command to the UE. The command itself is carried in a MAC CE, and contains a TCI state ID and a candidate cell index, which are arranged to indicate a candidate beam and a candidate cell respectively. After receiving the cell switch command, the UE completes the cell handover operation within a certain period of time.

For the mobility event(s) based on AI/ML prediction in the embodiments of the present disclosure, it is likely that the candidate beam and/or candidate cell predicted by the model has not been measured by the UE before. In this case, a group of measurement resources (e.g., a group of CSI-RS resources and/or SSB resources) may be additionally indicated in the cell switch command, and the UE may complete measurement and/or reporting of the target cell and/or target beam through the indicated resources.

For example, the UE may complete downlink synchronization by measuring SSB resources of the target cell, adjust the downlink receive spatial filter (beam), etc. The UE may perform time and frequency tracking by measuring CSI-RS (Tracking RS) of the target cell, or acquire CSI information of the cell in advance and feed it back to the NW.

### Embodiment 2: mobility event prediction with model deployed at the NW side

When the model is deployed at the NW side, the wireless communication method provided in the embodiments of the present disclosure, as shown in FIG. 22, includes operations S2201 to S2205.

At S2201, The UE reports its capabilities.

The UE reports its measurement capabilities for supported mobility events (including cell-level and beam-level). Specifically, the UE first informs the NW whether it supports spatial-domain measurement of mobility events. If the UE supports spatial-domain measurement of mobility events according its capabilities, the UE shall further report one or more combinations of the following information for subsequent configuration by the NW. The UE capabilities include, but are not limited to:
information 1: On one carrier, the maximum number of candidate cells that the UE supports to measure;
In some embodiments, one candidate cell corresponds to one measurement set; in other embodiments, multiple candidate cells correspond to one measurement set, i.e., downlink reference signal resources from multiple candidate cells (including the serving cell) are configured into one measurement set.

In some embodiments, on one carrier, the maximum number of measurement sets that the UE supports to measure. Within each measurement set, the maximum number of downlink measurement resources (such as CSI-RS resources and/or SSB resources) to be measured.

Note that since the model is deployed at the NW side, the UE does not need to report its prediction capability for mobility events.

At S2202, the NW configures measurement resources.

According to the UE capabilities report, the NW performs resource configuration for the UE, including but not limited to the following resources:
resource 1: the NW configures measurement sets Set Bₙ (1<=n<=N) of candidate cells (including serving cells) for the UE.

In addition, the NW optionally configures some uplink resources (PUSCH or PUCCH) for the UE. After the UE completes measurement of Set Bₙ (1<=n<=N), the uplink resources are arranged to carry reporting of measurement results. Set Bn (1<=n<=N) contains downlink measurement resources of candidate cells and serving cells.

In some embodiments, for cell-level mobility events, one candidate cell corresponds to one measurement set Set Bn (1<=n<=N), where N is the total number of candidate cell measurement sets. Each measurement set contains one or more downlink measurement resources of the candidate cell (including the serving cell), i.e., CSI-RS resources and/or SSB resources.

The configuration signaling used by the NW may be RRC signaling.

Note that since the model is deployed at the NW, the NW does not need to configure mobility event prediction sets for the UE.

At S2203, the UE measures and reports measurement results.

According to the configuration of the NW, the UE measures resource sets Set Bₙ (1<=n<=N) for mobility events. The UE measures and obtains link quality corresponding to resources in the set, such as L1-RSRP.

The UE reports the measurement results to the NW through uplink signaling. In some embodiments, the uplink signaling is reported in UCI at the physical layer in the form of beam reporting. The UCI may be carried in PUCCH or PUSCH. It should be emphasized that since Set Bₙ (1<=n<=N) contains a serving cell and multiple candidate cells, the measurement volume is often large, which can hardly meet the carrying requirement according to the traditional NR rule of at most 4 reference signal resource indexes and corresponding link quality (such as L1-RSRP) per report.

The embodiments of the present disclosure consider enhancing the volume of uplink beam reporting in the following manner.

First manner, i.e., the first transmission manner: the UE performs reporting in the order of pre-configured or arranged measurement sets Set Bₙ. For example, the UE first reports measurement results of measurement resources in Set B₁, then reports measurement results of measurement resources in Set B₂, ...and finally reports measurement results of measurement resources in Set B_{N}. The measurement results contain the resource index and the link quality, but not the index of Set Bₙ. In Table 1, the UE reports measurement results of N measurement sets in total, assuming each measurement set contains M measurement resources. In some embodiments, the number of resources in each measurement set may be different. Reporting measurement results based on the first manner avoids reporting the index of Set Bₙ, reduces reporting overhead, and thus allows reporting of more resource indexes and corresponding link quality.

**Table 1 Example of Reported Measurement Results**

| CSI report number | CSI fields |
|---|---|
| | CSI RS Index (CRI) or SSB Resource Index (SSBRI) # 1 (if reported) |
| | CRI or SSBRI #2, if reported |
| CSI report #n | ... |
| | CRI or SSBRI #N*M, if reported |
| | RSRP # 1, if reported |
| | Differential RSRP #2, if reported |
| | ... |
| | Differential RSRP #N*M, if reported |

The field CRI or SSBRI#1 is arranged to indicate the resource index to be reported, and only one of CRI or SSBRI, or both CRI and SSBRI may be reported.

Second manner, i.e., the second transmission manner: the UE reports not only in the order of pre-configured or arranged measurement sets Set Bₙ, but also in the order of resources in each measurement set. As shown in Table 2, for Set Bₙ, RSRP is reported in the order of resources in the resource set. For example, there are 16 resources in Set Bₙ, and link quality corresponding to 16 resources may be reported according to a specific resource order (e.g., resource indexes from high to low or from low to high), which further saves reporting overhead occupied by resource indexes.

Since the measurement resources are configured by the NW, the NW side can recognize the resource indexes and measurement set indexes corresponding to the reported link quality.

**Table 2 Example of Reported Measurement Results**

| CSI report number | CSI fields |
|---|---|
| | RSRP #1, if reported |
| CSI report #n | Differential RSRP #2, if reported |
| | ... |
| | Differential RSRP #N*M, if reported |

Third manner, i.e., the third transmission manner: different from the first and second manners (increasing reporting volume by reducing reporting content), it considers concatenating contents of multiple reporting instances, such as beam reporting instance #1, beam reporting instance #3 and beam reporting instance #6, to form a complete reporting content.

The premise for this is that the UE needs to inform the NW in the reporting content which beam reporting instances are sequentially arranged to report the complete measurement set Set Bₙ (1<=n<=N). In other embodiments, the NW may also inform the UE through pre-configuration or indication which (more than one) beam reporting instances are to be arranged to report the complete measurement set Set Bₙ (1<=n<=N).

It should be noted that the third reporting manner may also be used in combination with the first or second reporting manner.

In other embodiments, the uplink signaling may be MAC CE or RRC signaling.

At S2204, the NW infers mobility events through the model.

The NW-side model performs inference similar to the UE-side model, see description of S1904 here.

At S2205, the NW indicates mobility information to the UE.

The description of S2205 is the same as that of S1905 and will not be repeated here.

The preferred embodiments of the present disclosure have been described in detail above with reference to the accompanying drawings. However, the present disclosure is not limited to the specific details in the above embodiments. Within the scope of the technical concept of the present disclosure, many simple modifications may be made to the technical solution of the present disclosure, and these simple modifications all belong to the protection scope of the present disclosure. For example, the specific technical features described in the above specific embodiments may be combined in any appropriate manner without contradiction, and the present disclosure will not describe various possible combinations separately to avoid unnecessary repetition. For another example, various different embodiments of the present disclosure may also be combined arbitrarily as long as they do not violate the idea of the present disclosure, which shall also be regarded as the content disclosed by the present disclosure. For another example, on the premise of no conflict, the various embodiments described in the present disclosure and/or the technical features in the various embodiments may be combined with the prior art arbitrarily, and the technical solution obtained after combination shall also fall within the protection scope of the present disclosure.

It should also be understood that in the various method embodiments of the present disclosure, the sequence numbers of the above processes do not mean the order of execution, and the execution order of each process shall be determined by its function and internal logic, which shall not constitute any limitation on the implementation process of the embodiments of the present disclosure. In addition, in the embodiments of the present disclosure, the terms "downlink", "uplink" and "sidelink" are arranged to indicate the transmission direction of signals or data, where "downlink" is arranged to indicate that the transmission direction of signals or data is a first direction from a station to user equipment in a cell, "uplink" is arranged to indicate that the transmission direction of signals or data is a second direction from user equipment in a cell to a station, and "sidelink" is arranged to indicate that the transmission direction of signals or data is a third direction from user equipment 1 to user equipment 2. For example, "downlink signal" means that the transmission direction of the signal is the first direction. In addition, in the embodiments of the present disclosure, the term "and/or" is only an association relationship describing associated objects, indicating that three relationships may exist. Specifically, A and/or B may mean: A exists alone, A and B exist simultaneously, and B exists alone. In addition, the character "/" herein generally indicates that the associated objects are in an "or" relationship.

FIG. 23 is a schematic structural diagram of a terminal device provided in an embodiment of the present disclosure. As shown in FIG. 23, the terminal device 2300 apparatus includes a first processing unit 2301.

The first processing unit 2301 is configured to predict first prediction information based on one or more first measurement results, where the first prediction information is associated with one or more first prediction results, the one or more first measurement results are measurement results obtained by measuring one or more first cells, and the one or more first prediction results are measurement results of a second cell(s) predicted based on the one or more first measurement results.

In some embodiments, the first prediction information includes one or more of the following:
first indication information, where the first indication information is arranged to indicate whether one or more first mobility events occur, and the first mobility events are associated with the first prediction results;
second indication information, where the second indication information is arranged to indicate an event type(s) of the occurred first mobility event(s); and/or
first information, where the first information indicates a first prediction result(s) of the occurred first mobility event(s).

In some embodiments, the one or more first mobility events are mobility event(s) configured or predefined by a network device.

In some embodiments, the one or more first mobility events include(s) one or more of the following first event(s):
the one or more second cells corresponding to the one or more first mobility events include a serving cell, and link performance of the serving cell measured and/or predicted based on Layer 1 is better than a first threshold;
the one or more second cells include a serving cell, and link performance of the serving cell measured and/or predicted based on Layer 1 is worse than a second threshold;
the one or more second cells include a candidate cell and a serving cell, and link performance of the candidate cell measured and/or predicted based on Layer 1 is better than first link performance, where the first link performance is link performance of the serving cell plus a first offset;
the one or more second cells include a candidate cell, and link performance of the candidate cell measured and/or predicted based on Layer 1 is better than a third threshold;
the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells include a candidate cell, and interference of the candidate cell measured and/or predicted based on Layer 1 is stronger than a first interference threshold.

In some embodiments, the one or more first mobility events include one or more of the following second events:
the one or more second cells corresponding to the one or more first mobility events include a serving cell, and performance of a serving spatial filter of the serving cell measured and/or predicted based on Layer 1 is better than a sixth threshold;
the one or more second cells include a serving cell, and performance of the serving spatial filter of the serving cell measured and/or predicted based on Layer 1 is worse than a seventh threshold;
the one or more second cells include a candidate cell and a serving cell, and performance of a candidate spatial filter of the candidate cell measured and/or predicted based on Layer 1 is better than second link performance, where the second link performance is performance of the serving spatial filter of the serving cell plus a second offset;
the one or more second cells include a candidate cell, and performance of the candidate spatial filter of the candidate cell measured and/or predicted based on Layer 1 is better than an eighth threshold;
the one or more second cells include a candidate cell , performance of a serving spatial filter of the serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells include a candidate cell, and interference of a candidate beam of the candidate cell measured and/or predicted based on Layer 1 is stronger than a second interference threshold.

In some embodiments, the terminal device 2300 further includes:
a communication unit, configured to send second information to a network device, where the second information is arranged to indicate a second mobility event(s), and the second mobility event(s) is/are the reported first mobility event(s).

In some embodiments, the second mobility event(s) is/are:
determined by the terminal device; or,
indicated by the network device; or,
predefined.

In some embodiments, the second information is transmitted through one or more of the following signaling:
physical layer control signaling;
Media Access Control Control Element (MAC CE) of a Media Access Control (MAC) layer; and/or
mobility-related signaling of a Radio Resource Control (RRC) layer.

In some embodiments, for one second mobility event, the second information includes one or more of the following information:
third indication information, where the third indication information is arranged to indicate an event type of the second mobility event; and/or
first information corresponding to the second mobility event.

In some embodiments, the first information includes one or more of the following information:
a cell index and/or cell link quality; and/or
a spatial filter index and/or spatial filter link quality.

In some embodiments, the communication unit is further configured to receive a cell switch command sent by the network device, where the cell switch command carries third information indicating a target cell, and the third information is associated with the second information.

In some embodiments, if the target cell indicated by the third information does not belong to the first cell(s), the third information is further arranged to indicate first measurement resources, where the first measurement resources are used for measurement of the target cell and/or reporting of measurement results.

In some embodiments, the communication unit is further configured to receive first configuration information sent by the network device, where the first configuration information is arranged to configure one or more first sets and/or one or more second sets, the one or more first sets include second measurement resources of one or more first cells, the one or more second sets include prediction resources of one or more third cells, and the second cell is one cell among the one or more third cells.

In some embodiments, one or more first cells correspond to one first set.

In some embodiments, one or more third cells correspond to one second set.

In some embodiments, the second measurement resources included in the first set and the prediction resources included in the second set have no same resources; or,
one first cell corresponds to one first set and one second set, and the first set is a subset of the second set.

In some embodiments, one third cell corresponds to one second set and has no corresponding first set.

18. The method according to any one of claims 13 to 17, wherein the first configuration information is further arranged to configure one or more of the following:
a third mobility event, where the third mobility event is a mobility event predicted by using the one or more first measurement results; and/or
first uplink resources or second uplink resources, where the first uplink resources are used for reporting of a second mobility event(s), the second uplink resources are used for transmitting a first request, the first request is/are arranged to request the first uplink resources, and the second mobility event is a reported first mobility event included in the first prediction information.

In some embodiments, the communication unit is further configured to send fourth information to the network device, where the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, where the one or more fourth mobility events are mobility events supported to be predicted by the one or more first measurement results;
a first number, where the first number is the number of first cell(s) supported by the terminal device on one carrier;
a second number, where the second number is the number of first set(s) supported by the terminal device on one carrier, and one first set includes second measurement resource(s) corresponding to one or more first cells; and/or
a third number, where the third number is the number of second set(s) supported by the terminal device on one carrier; the second set(s) is/are arranged to configure prediction resources of third cell(s); and the third cell(s) is/are cell(s) corresponding to prediction result(s) predicted by using the one or more first measurement results.

In the embodiments of the present disclosure, the communication unit may be implemented by a transceiver in the terminal device, and the first processing unit may be implemented by a processor in the terminal device.

FIG. 24 is a schematic structural diagram of a network device provided in an embodiment of the present disclosure. As shown in FIG. 24, an apparatus of the network device 2400 includes:
a first communication unit 2401, configured to receive second information sent by a terminal device, where the second information is arranged to indicate a second mobility event(s), the second mobility event(s) is/are a first mobility event(s) being reported, the one or more first mobility events are associated with a first prediction result(s), the one or more first prediction results are measurement results of a second cell(s) predicted based on one or more first measurement results, and the one or more first measurement results are measurement results obtained by measuring the first cell(s);
where the one or more first measurement results are arranged to predict first prediction information, and the first prediction information is associated with one or more first prediction results.

In some embodiments, the first prediction information includes one or more of the following:
first indication information, where the first indication information is arranged to indicate whether one or more first mobility events occur, and the one or more first mobility events are associated with the one or more first prediction results;
second indication information, where the second indication information is arranged to indicate an event type(s) of the occurred first mobility event(s); and/or
first information, where the first information indicates a first prediction result(s) corresponding to the occurred first mobility event(s).

In some embodiments, the one or more first mobility events are mobility events configured or predefined by the network device.

In some embodiments, the one or more first mobility events include one or more of the following first events:
one or more second cells corresponding to the one or more first mobility events include a serving cell, and link performance of the serving cell measured and/or predicted based on Layer 1 is better than a first threshold;
the one or more second cells include a serving cell, and link performance of the serving cell measured and/or predicted based on Layer 1 is worse than a second threshold;
the one or more second cells include a candidate cell and a serving cell, and link performance of the candidate cell measured and/or predicted based on Layer 1 is better than first link performance, where the first link performance is link performance of the serving cell plus a first offset;
the one or more second cells include a candidate cell, and link performance of the candidate cell measured and/or predicted based on Layer 1 is better than a third threshold;
the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells include a candidate cell, and interference of the candidate cell measured and/or predicted based on Layer 1 is stronger than a first interference threshold.

In some embodiments, the one or more first mobility events include one or more of the following second events:
one or more second cells corresponding to the one or more first mobility events include a serving cell, and performance of a serving spatial filter of the serving cell measured and/or predicted based on Layer 1 is better than a sixth threshold;
the one or more second cells include a serving cell, and performance of the serving spatial filter of the serving cell measured and/or predicted based on Layer 1 is worse than a seventh threshold;
the one or more second cells include a candidate cell and a serving cell, and performance of a candidate spatial filter of the candidate cell measured and/or predicted based on Layer 1 is better than second link performance, where the second link performance is performance of the serving spatial filter of the serving cell plus a second offset;
the one or more second cells include a candidate cell, and performance of the candidate spatial filter of the candidate cell measured and/or predicted based on Layer 1 is better than an eighth threshold;
the one or more second cells include a candidate cell, performance of the serving spatial filter of the serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells include a candidate cell, and interference of a candidate beam of the candidate cell measured and/or predicted based on Layer 1 is stronger than a second interference threshold.

In some embodiments, the second mobility event(s) is/are:
determined by the terminal device; or,
indicated by the network device; or,
predefined.

In some embodiments, the second information is transmitted through one or more of the following signaling:
physical layer control signaling;
Media Access Control Control Element (MAC CE) of a Media Access Control (MAC) layer; and/or
mobility-related signaling of a Radio Resource Control (RRC) layer.

In some embodiments, for one second mobility event, the second information includes one or more of the following information:
third indication information, where the third indication information is arranged to indicate an event type of the second mobility event; and/or
first information corresponding to the second mobility event.

In some embodiments, the first information includes one or more of the following information:
a cell index and/or cell link quality; and/or
a spatial filter index and/or spatial filter link quality.

In some embodiments, the first communication unit 2401 is further configured to:
send a cell switch command to the terminal device, where the cell switch command carries third information indicating a target cell, and the third information is associated with the second information.

In some embodiments, if the target cell indicated by the third information does not belong to the first cell(s), the third information is further arranged to indicate first measurement resources, where the first measurement resources are used for measurement of the target cell and/or reporting of measurement results.

In some embodiments, the first communication unit 2401 is further configured to send first configuration information to the terminal device, where the first configuration information is arranged to configure one or more first sets and/or one or more second sets, the one or more first sets include second measurement resources corresponding to one or more first cells, the one or more second sets include prediction resources of one or more third cells, and the second cell is one cell among the one or more third cells.

In some embodiments, one or more first cells correspond to one first set.

In some embodiments, one or more third cells correspond to one second set.

In some embodiments, the second measurement resources included in the first set and the prediction resources included in the second set have no same resources; or,
one first cell corresponds to one first set and one second set, and the first set is a subset of the second set.

In some embodiments, one third cell corresponds to one second set and has no corresponding first set.

In some embodiments, the first configuration information is further arranged to configure one or more of the following:
a third mobility event(s), where the third mobility event(s) is/are mobility event(s) predicted by using the one or more first measurement results; and/or
first uplink resources or second uplink resources, where the first uplink resources are used for reporting of a second mobility event(s), the second uplink resources are used for transmitting a first request, the first request is arranged to request the first uplink resources, and the second mobility event(s) is/are the reported first mobility event(s) included in the first prediction information.

In some embodiments, the first communication unit 2401 is further configured to receive fourth information sent by the terminal device, where the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, where the one or more fourth mobility events are mobility events supported to be predicted by the one or more first measurement results;
a first number, where the first number is the number of first cell(s) supported by the terminal device on one carrier;
a second number, where the second number is the number of first set(s) supported by the terminal device on one carrier, and one first set includes second measurement resources corresponding to one or more first cells; and/or
a third number, where the third number is the number of second set(s) supported by the terminal device on one carrier; the second set(s) is/are used for configuring prediction resource(s) of third cell(s); and the third cell(s) is/are cell(s) corresponding to prediction result(s) predicted by using the one or more first measurement results.

In the embodiments of the present disclosure, the first communication unit may be implemented by a transceiver in the network device.

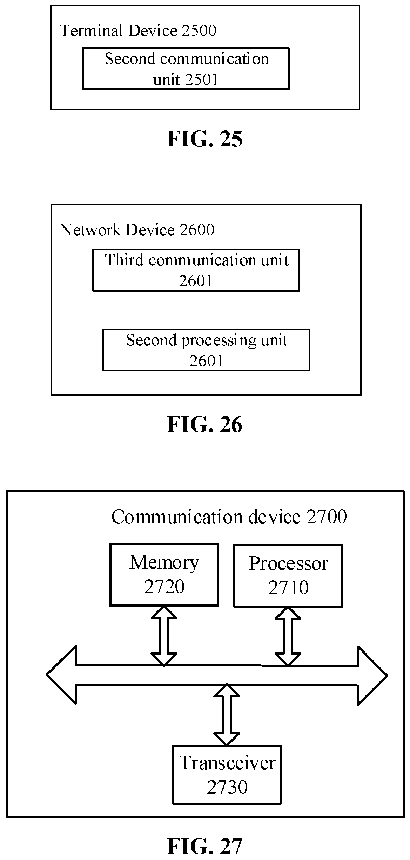

FIG. 25 is a schematic structural diagram of a terminal device provided in an embodiment of the present disclosure. As shown in FIG. 25, an apparatus of the terminal device 2500 includes a second communication unit 2501.

The second communication unit 2501 is configured to send one or more first measurement results to a network device, where the one or more first measurement results are measurement results obtained by measuring a first cell(s); the one or more first measurement results are arranged to predict first prediction information, the first prediction information is associated with one or more first prediction results, and the one or more first prediction results are measurement results of a second cell(s) predicted based on the one or more first measurement results.

In some embodiments, the first prediction information includes one or more of the following:
first indication information, where the first indication information is arranged to indicate whether one or more first mobility events occur, and the one or more first mobility events are associated with the one or more first prediction results;
second indication information, where the second indication information is arranged to indicate an event type(s) of the occurred first mobility event(s); and/or
first information, where the first information indicates a first prediction result(s) corresponding to the occurred first mobility event(s).

In some embodiments, the one or more first mobility events include one or more of the following first events:
one or more second cells corresponding to the one or more first mobility events include a serving cell, and link performance of the serving cell measured and/or predicted based on Layer 1 is better than a first threshold;
the one or more second cells include a serving cell, and link performance of the serving cell measured and/or predicted based on Layer 1 is worse than a second threshold;
the one or more second cells include a candidate cell and a serving cell, and link performance of the candidate cell measured and/or predicted based on Layer 1 is better than first link performance, where the first link performance is link performance of the serving cell plus a first offset;
the one or more second cells include a candidate cell, and link performance of the candidate cell measured and/or predicted based on Layer 1 is better than a third threshold;
the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells include a candidate cell, and interference of the candidate cell measured and/or predicted based on Layer 1 is stronger than a first interference threshold.

In some embodiments, the one or more first mobility events include one or more of the following second events:
one or more second cells corresponding to the one or more first mobility events include a serving cell, and performance of a serving spatial filter of the serving cell measured and/or predicted based on Layer 1 is better than a sixth threshold;
the one or more second cells include a serving cell, and performance of the serving spatial filter of the serving cell measured and/or predicted based on Layer 1 is worse than a seventh threshold;
the one or more second cells include a candidate cell and a serving cell, and performance of a candidate spatial filter of the candidate cell measured and/or predicted based on Layer 1 is better than second link performance, where the second link performance is performance of the serving spatial filter of the serving cell plus a second offset;
the one or more second cells include a candidate cell, and performance of the candidate spatial filter of the candidate cell measured and/or predicted based on Layer 1 is better than an eighth threshold;
the one or more second cells include a candidate cell, performance of a serving spatial filter of the serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells include a candidate cell, and interference of a candidate beam of the candidate cell measured and/or predicted based on Layer 1 is stronger than a second interference threshold.

In some embodiments, the first information includes one or more of the following information:
a cell index and/or cell link quality; and/or
a spatial filter index and/or spatial filter link quality.

In some embodiments, a transmission manner of the multiple first measurement results includes one of the following:
transmitting in a first order, where the first order is a pre-configured or predefined order of first set(s), and one first set includes second measurement resources corresponding to one or more first cells;
transmitting in the first order and a second order, where the second order is an order of second measurement resources in a first set.

In some embodiments, the transmission manner of the multiple first measurement results includes:
transmitting based on a reporting instance, where one reporting instance includes multiple spatial filter reporting instances.

In some embodiments, the reporting instance includes fourth indication information, where the fourth indication information is arranged to indicate an order of multiple spatial filter reporting instances included in the reporting instance.

In some embodiments, multiple spatial filter reporting instances included in the reporting instance are configured by the network device.

In some embodiments, the second communication unit 2501 is further configured to receive a cell switch command sent by the network device, where the cell switch command carries fifth information indicating a target cell, and the fifth information is associated with the first prediction information.

In some embodiments, if the target cell does not belong to the first cell(s), the fifth information is further arranged to indicate first measurement resources, where the first measurement resources are used for measurement of the target cell and/or reporting of measurement results.

In some embodiments, the second communication unit 2501 is further configured to receive second configuration information sent by the network device, where the second configuration information is arranged to configure one or more first sets, and the one or more first sets include second measurement resources corresponding to one or more first cells.

In some embodiments, one or more first cells correspond to one first set.

In some embodiments, the second configuration information is further arranged to configure third uplink resources, where the third uplink resources are used for transmission of the one or more first measurement results.

In some embodiments, the second communication unit 2501 is further configured to send sixth information to the network device, where the sixth information is arranged to indicate one or more of the following capabilities of the terminal device:
whether the terminal device supports measurement of the one or more first measurement results;
a first number, where the first number is the number of first cell(s) supported by the terminal device on one carrier; and/or
a second number, where the second number is the number of first set(s) supported by the terminal device on one carrier, and one first set includes second measurement resources corresponding to one or more first cells.

In the embodiments of the present disclosure, the second communication unit may be implemented by a transceiver in the terminal device.

FIG. 26 is a schematic structural diagram of a network device provided in an embodiment of the present disclosure. As shown in FIG. 26, an apparatus of the network device 2600 includes a third communication unit 2601.

The third communication unit 2601 is configured to receive one or more first measurement results sent by a terminal device, where the one or more first measurement results are measurement results obtained by measuring a first cell(s);
a second processing unit 2602, configured to predict first prediction information based on the one or more first measurement results, where the first prediction information is associated with one or more first prediction results, and the one or more first prediction results are measurement results of a second cell(s) predicted based on the one or more first measurement results.

In some embodiments, the first prediction information includes one or more of the following:
first indication information, where the first indication information is arranged to indicate whether one or more first mobility events occur, and the one or more first mobility events are associated with the one or more first prediction results;
second indication information, where the second indication information is arranged to indicate an event type(s) of the first mobility event(s); and/or
first information, where the first information indicates a first prediction result(s) corresponding to the first mobility event(s).

In some embodiments, the one or more first mobility events include one or more of the following first events:
one or more second cells corresponding to the one or more first mobility events include a serving cell, and link performance of the serving cell measured and/or predicted based on Layer 1 is better than a first threshold;
the one or more second cells include a serving cell, and link performance of the serving cell measured and/or predicted based on Layer 1 is worse than a second threshold;
the one or more second cells include a candidate cell and a serving cell, and link performance of the candidate cell measured and/or predicted based on Layer 1 is better than first link performance, where the first link performance is link performance of the serving cell plus a first offset;
the one or more second cells include a candidate cell, and link performance of the candidate cell measured and/or predicted based on Layer 1 is better than a third threshold;
the one or more second cells include a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells include a candidate cell, and interference of the candidate cell measured and/or predicted based on Layer 1 is stronger than a first interference threshold.

In some embodiments, the one or more first mobility events include one or more of the following second events:
one or more second cells corresponding to the one or more first mobility events include a serving cell, and performance of a serving spatial filter of the serving cell measured and/or predicted based on Layer 1 is better than a sixth threshold;
the one or more second cells include a serving cell, and performance of the serving spatial filter of the serving cell measured and/or predicted based on Layer 1 is worse than a seventh threshold;
the one or more second cells include a candidate cell and a serving cell, and performance of a candidate spatial filter of the candidate cell measured and/or predicted based on Layer 1 is better than second link performance, where the second link performance is performance of the serving spatial filter of the serving cell plus a second offset;
the one or more second cells include a candidate cell, and performance of the candidate spatial filter of the candidate cell measured and/or predicted based on Layer 1 is better than an eighth threshold;
the one or more second cells include a candidate cell, performance of the serving spatial filter of the serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells include a candidate cell, and interference of a candidate beam of the candidate cell measured and/or predicted based on Layer 1 is stronger than a second interference threshold.

In some embodiments, the first information includes one or more of the following information:
a cell index and/or cell link quality; and/or
a spatial filter index and/or spatial filter link quality.

In some embodiments, a transmission manner of the multiple first measurement results includes one of the following:
transmitting in a first order, where the first order is a pre-configured or predefined order of first set(s), and one first set includes second measurement resources corresponding to one or more first cells;
transmitting in the first order and a second order, where the second order is an order of second measurement resources in a first set.

In some embodiments, the transmission manner of the multiple first measurement results includes:
transmitting based on a reporting instance, where one reporting instance includes multiple spatial filter reporting instances.

In some embodiments, the reporting instance includes fourth indication information, where the fourth indication information is arranged to indicate an order of multiple spatial filter reporting instances included in the reporting instance.

In some embodiments, multiple spatial filter reporting instances included in the reporting instance are configured by the network device.

In some embodiments, the third communication unit 2601 is further configured to send a cell switch command to the terminal device, where the cell switch command carries fifth information indicating a target cell, and the fifth information is associated with the first prediction information.

In some embodiments, if the target cell does not belong to the first cell(s), the fifth information is further arranged to indicate first measurement resources, where the first measurement resources are used for measurement of the target cell and/or reporting of measurement results.

In some embodiments, the third communication unit 2601 is further configured to send second configuration information to the terminal device, where the second configuration information is arranged to configure one or more first sets, and the one or more first sets include second measurement resources corresponding to one or more first cells.

In some embodiments, one or more first cells correspond to one first set.

In some embodiments, the second configuration information is further arranged to configure third uplink resources, where the third uplink resources are used for transmission of the one or more first measurement results.

In some embodiments, the third communication unit 2601 is further configured to receive sixth information sent by the terminal device, where the sixth information is arranged to indicate one or more of the following capabilities of the terminal device:
whether the terminal device supports measurement of the one or more first measurement results;
a first number, where the first number is the number of first cell(s) supported by the terminal device on one carrier; and/or
a second number, where the second number is the number of first set(s) supported by the terminal device on one carrier, and one first set includes second measurement resources corresponding to one or more first cells.

In the embodiments of the present disclosure, the third communication unit may be implemented by a transceiver in the network device, and the second processing unit may be implemented by a processor in the network device.

A person skilled in the art should understand that the above descriptions related to the terminal device or the network device in the embodiments of the present disclosure may be understood with reference to the related descriptions of the wireless communication method in the embodiments of the present disclosure.

FIG. 27 is a schematic structural diagram of a communication device 2700 provided in an embodiment of the present disclosure. The communication device may be a terminal device or a network device. The communication device 2700 shown in FIG. 27 includes a processor 2710, and the processor 2710 may call and run a computer program from a memory to implement the method in the embodiments of the present disclosure.

Optionally, as shown in FIG. 27, the communication device 2700 may further include a memory 2720. The processor 2710 may call and run a computer program from the memory 2720 to implement the method in the embodiments of the present disclosure.

The memory 2720 may be a separate device independent of the processor 2710, or may be integrated in the processor 2710.

Optionally, as shown in FIG. 27, the communication device 2700 may further include a transceiver 2730, and the processor 2710 may control the transceiver 2730 to communicate with other devices, specifically, may send information or data to other devices, or receive information or data sent by other devices.

The transceiver 2730 may include a transmitter and a receiver. The transceiver 2730 may further include antennas, and the number of antennas may be one or more.

Optionally, the communication device 2700 may specifically be a network device in the embodiments of the present disclosure, and the communication device 2700 may implement corresponding processes implemented by the network device in various methods in the embodiments of the present disclosure. For brevity, details are not described herein again.

Optionally, the communication device 2700 may specifically be a mobile terminal/terminal device in the embodiments of the present disclosure, and the communication device 2700 may implement corresponding processes implemented by the mobile terminal/terminal device in various methods in the embodiments of the present disclosure. For brevity, details are not described herein again.

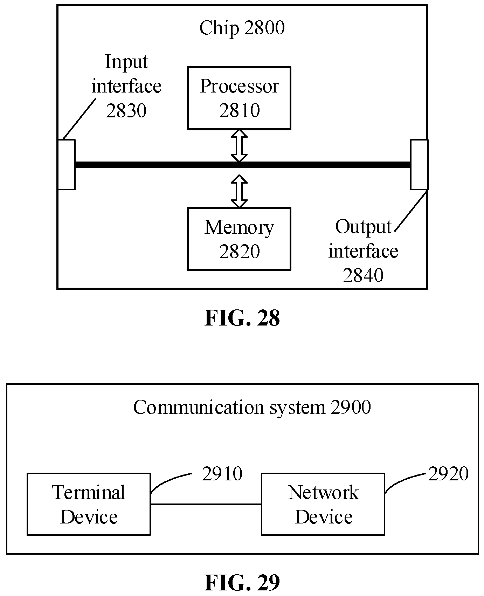

FIG. 28 is a schematic structural diagram of a chip in an embodiment of the present disclosure. A chip 2800 shown in FIG. 28 includes a processor 2810, and the processor 2810 may call and run a computer program from a memory to implement the method in the embodiments of the present disclosure.

Optionally, as shown in FIG. 28, the chip 2800 may further include a memory 2820. The processor 2810 may call and run a computer program from the memory 2820 to implement the method in the embodiments of the present disclosure.

The memory 2820 may be a separate device independent of the processor 2810, or may be integrated in the processor 2810.

Optionally, the chip 2800 may further include an input interface 2830. The processor 2810 may control the input interface 2830 to communicate with other devices or chips, specifically, may obtain information or data sent by other devices or chips.

Optionally, the chip 2800 may further include an output interface 2840. The processor 2810 may control the output interface 2840 to communicate with other devices or chips, specifically, may output information or data to other devices or chips.

Optionally, the chip may be applied to the network device in the embodiments of the present disclosure, and the chip may implement corresponding processes implemented by the network device in various methods in the embodiments of the present disclosure. For brevity, details are not described herein again.

Optionally, the chip may be applied to the mobile terminal/terminal device in the embodiments of the present disclosure, and the chip may implement corresponding processes implemented by the mobile terminal/terminal device in various methods in the embodiments of the present disclosure. For brevity, details are not described herein again.

It should be understood that the chip mentioned in the embodiments of the present disclosure may also be referred to as a system-on-chip, a system chip, a chip system, or a system-on-chip chip.

FIG. 29 is a schematic block diagram of a communication system 2900 provided in an embodiment of the present disclosure. As shown in FIG. 29, the communication system 2900 includes a terminal device 2910 and a network device 2920.

The terminal device 2910 may be configured to implement corresponding functions implemented by the terminal device in the foregoing method, and the network device 2920 may be configured to implement corresponding functions implemented by the network device in the foregoing method. For brevity, details are not described herein again.

It should be understood that the processor in the embodiments of the present disclosure may be an integrated circuit chip with signal processing capability. During implementation, steps of the foregoing method embodiments may be completed by an integrated logic circuit of hardware in the processor or instructions in a form of software. The foregoing processor may be a general-purpose processor, a Digital Signal Processor (DSP), an Application Specific Integrated Circuit (ASIC), a Field Programmable Gate Array (FPGA), another programmable logic device, a discrete gate or transistor logic device, or a discrete hardware component. Various methods, steps, and logical block diagrams disclosed in the embodiments of the present disclosure may be implemented or executed. The general-purpose processor may be a microprocessor, or the processor may be any conventional processor. Steps of the method disclosed in combination with the embodiments of the present disclosure may be directly implemented and completed by a hardware decoding processor, or implemented and completed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps of the foregoing method in combination with hardware of the processor.

It may be understood that the memory in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), used as an external cache. By way of example but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the system and method described herein is intended to include, but is not limited to, these and any other suitable types of memories.

It should be understood that the foregoing memory is exemplary but not restrictive. For example, the memory in the embodiments of the present disclosure may alternatively be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM), or the like. That is, the memory in the embodiments of the present disclosure is intended to include, but is not limited to, these and any other suitable types of memories.

An embodiment of the present disclosure further provides a computer-readable storage medium, configured to store a computer program.

Optionally, the computer-readable storage medium may be applied to the network device in the embodiments of the present disclosure, and the computer program enables a computer to perform corresponding processes implemented by the network device in various methods in the embodiments of the present disclosure. For brevity, details are not described herein again.

Optionally, the computer-readable storage medium may be applied to the mobile terminal/terminal device in the embodiments of the present disclosure, and the computer program enables a computer to perform corresponding processes implemented by the mobile terminal/terminal device in various methods in the embodiments of the present disclosure. For brevity, details are not described herein again.

An embodiment of the present disclosure further provides a computer program product, including computer program instructions.

Optionally, the computer program product may be applied to the network device in the embodiments of the present disclosure, and the computer program instructions enable a computer to perform corresponding processes implemented by the network device in various methods in the embodiments of the present disclosure. For brevity, details are not described herein again.

Optionally, the computer program product may be applied to the mobile terminal/terminal device in the embodiments of the present disclosure, and the computer program instructions enable a computer to perform corresponding processes implemented by the mobile terminal/terminal device in various methods in the embodiments of the present disclosure. For brevity, details are not described herein again.

An embodiment of the present disclosure further provides a computer program.

Optionally, the computer program may be applied to the network device in the embodiments of the present disclosure. When the computer program runs on a computer, the computer is enabled to perform corresponding processes implemented by the network device in various methods in the embodiments of the present disclosure. For brevity, details are not described herein again.

Optionally, the computer program may be applied to the mobile terminal/terminal device in the embodiments of the present disclosure. When the computer program runs on a computer, the computer is enabled to perform corresponding processes implemented by the mobile terminal/terminal device in various methods in the embodiments of the present disclosure. For brevity, details are not described herein again.

A person of ordinary skill in the art may be aware that the units and algorithm steps of the examples described in combination with the embodiments disclosed herein may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but this implementation should not be considered to be beyond the scope of the present disclosure.

A person skilled in the art may clearly understand that, for the purpose of convenient and brief description, for a specific working process of the foregoing system, apparatus, and unit, reference may be made to a corresponding process in the foregoing method embodiments, and details are not described herein again.

In the several embodiments provided in the present disclosure, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual coupling or direct coupling or communication connection may be indirect coupling or communication connection through some interfaces, apparatuses or units, and may be in an electrical, mechanical or other form.

The units described as separate parts may or may not be physically separated, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present disclosure. The foregoing storage medium includes: any medium that can store program code, such as a USB flash drive, a removable hard disk, a Read-Only Memory (ROM), a Random Access Memory (RAM), a magnetic disk, or an optical disc.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A wireless communication method, comprising:
predicting, by a terminal device, first prediction information based on one or more first measurement results,
wherein the first prediction information is associated with one or more first prediction results, the one or more first measurement results are measurement results obtained by measuring one or more first cells, and the one or more first prediction results are measurement results of one or more second cells predicted based on the one or more first measurement results.

2. The method according to claim 1, wherein the first prediction information comprises one or more of the following:
first indication information indicating whether one or more first mobility events occur, wherein the one or more first mobility events are associated with the one or more first prediction results;
second indication information indicating an event type(s) of the occurred first mobility events; and/or
first information indicating first prediction results of the occurred first mobility events.

3. The method according to claim 2, wherein the one or more first mobility events are mobility events configured by a network device or predefined.

4. The method according to any one of claims 2 to 3, wherein the one or more first mobility events comprise one or more of the following first events:
the one or more second cells corresponding to the one or more first mobility events comprise a serving cell, and link performance of the serving cell measured and/or predicted based on Layer 1 is better than a first threshold;
the one or more second cells comprise a serving cell, and link performance of the serving cell measured and/or predicted based on Layer 1 is worse than a second threshold;
the one or more second cells comprise a candidate cell and a serving cell, and link performance of the candidate cell measured and/or predicted based on Layer 1 is better than first link performance, wherein the first link performance is link performance of the serving cell plus a first offset;
the one or more second cells comprise a candidate cell, and link performance of the candidate cell measured and/or predicted based on Layer 1 is better than a third threshold;
the one or more second cells comprise a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells comprise a candidate cell, and interference of the candidate cell measured and/or predicted based on Layer 1 is stronger than a first interference threshold.

5. The method according to any one of claims 2 to 3, wherein the one or more first mobility events comprise one or more of the following second events:
the one or more second cells corresponding to the one or more first mobility events comprise a serving cell, and performance of a serving spatial filter of the serving cell measured and/or predicted based on Layer 1 is better than a sixth threshold;
the one or more second cells comprise a serving cell, and performance of a serving spatial filter of the serving cell measured and/or predicted based on Layer 1 is worse than a seventh threshold;
the one or more second cells comprise a candidate cell and a serving cell, and performance of a candidate spatial filter of the candidate cell measured and/or predicted based on Layer 1 is better than second link performance, wherein the second link performance is performance of the serving spatial filter of the serving cell plus a second offset;
the one or more second cells comprise a candidate cell, and performance of a candidate spatial filter of the candidate cell measured and/or predicted based on Layer 1 is better than an eighth threshold;
the one or more second cells comprise a candidate cell, performance of a serving spatial filter of a serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells comprise a candidate cell, and interference of a candidate beam of the candidate cell measured and/or predicted based on Layer 1 is stronger than a second interference threshold.

6. The method according to any one of claims 2 to 5, further comprising:
sending, by the terminal device, second information to a network device, wherein the second information is arranged to indicate one or more second mobility events, and the one or more second mobility events are the first mobility events being reported.

7. The method according to claim 6, wherein the one or more second mobility events are:
determined by the terminal device; or,
indicated by the network device; or,
predefined.

8. The method according to claim 6 or 7, wherein the second information is transmitted via one or more of the following signaling:
physical layer control signaling;
Medium Access Control layer Control Element (MAC CE) of a Medium Access Control (MAC) layer; and/or
mobility-related signaling of a Radio Resource Control (RRC) layer.

9. The method according to any one of claims 6 to 8, wherein for the one second mobility event, the second information comprises one or more of the following information:
third indication information indicating an event type of the second mobility event; and/or
first information corresponding to the second mobility event.

10. The method according to any one of claims 2 to 9, wherein the first information comprises one or more of the following information:
a cell index and/or cell link quality; and/or
a spatial filter index and/or spatial filter link quality.

11. The method according to any one of claims 6 to 9, further comprising:
receiving, by the terminal device, a cell switch command sent by the network device, wherein the cell switch command carries third information indicating a target cell, and the third information is associated with the second information.

12. The method according to claim 11, wherein if the target cell indicated by the third information does not belong to the one or more first cells, the third information is further arranged to indicate first measurement resources, wherein the first measurement resources are used for measurement of the target cell and/or reporting of measurement results.

13. The method according to any one of claims 1 to 12, further comprising:
receiving, by the terminal device, first configuration information sent by a network device,
wherein the first configuration information is arranged to configure one or more first sets and/or one or more second sets, the one or more first sets comprise second measurement resources of one or more first cells, the one or more second sets comprise prediction resources of one or more third cells, and the second cell is one of the one or more third cells.

14. The method according to claim 13, wherein the one or more first cells correspond to the one first set.

15. The method according to claim 13 or 14, wherein the one or more third cells correspond to the one second set.

16. The method according to any one of claims 13 to 15, wherein:
the second measurement resources comprised in the first set and the prediction resources comprised in the second set have no same resources; or,
the one first cell corresponds to one first set and one second set, and the first set is a subset of the second set.

17. The method according to any one of claims 13 to 15, wherein the one third cell corresponds to one second set and has no corresponding first set.

18. The method according to any one of claims 13 to 17, wherein the first configuration information is further arranged to configure one or more of the following:
one or more third mobility events, wherein the one or more third mobility events are mobility events predicted using the one or more first measurement results; and/or
first uplink resources or second uplink resources, wherein the first uplink resources are used for reporting of second mobility events, the second uplink resources are used for transmitting first request, the first request is arranged to request the first uplink resources, and the one or more second mobility events are the first mobility events being reported comprised in the first prediction information.

19. The method according to any one of claims 1 to 18, further comprising:
sending, by the terminal device fourth information to a network device, wherein the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, wherein the one or more fourth mobility events are mobility events supported to be predicted by the one or more first measurement results;
a first number, wherein the first number is a number of the first cells supported by the terminal device on one carrier;
a second number, wherein the second number is a number of first sets supported by the terminal device on one carrier, and one of the first sets comprises second measurement resources corresponding to the one or more first cells; and/or
a third number, wherein the third number is a number of second sets supported by the terminal device on one carrier, the second sets are arranged to configure prediction resources of one or more third cells, and the one or more third cells are cells corresponding to one or more prediction results predicted using the one or more first measurement results.

20. A wireless communication method, comprising:
receiving, by a network device, second information sent by a terminal device,
wherein the second information is arranged to indicate one or more second mobility events, the one or more second mobility events are first mobility events being reported, the first mobility events are associated with one or more first prediction results, the one or more first prediction results are measurement results of one or more second cells predicted based on one or more first measurement results, and the one or more first measurement results are measurement results obtained by measuring one or more first cells; and
wherein the one or more first measurement results are arranged to predict first prediction information, and the first prediction information is associated with the one or more first prediction results.

21. The method according to claim 20, wherein the first prediction information comprises one or more of the following:
first indication information indicating whether one or more first mobility events occur, wherein the one or more first mobility events are associated with the one or more first prediction results;
second indication information indicating an event type(s) of the occurred first mobility events; and/or
first information indicating the one or more first prediction results corresponding to the occurred first mobility events.

22. The method according to claim 21, wherein the one or more first mobility events are mobility events configured by the network device or predefined.

23. The method according to any one of claims 21 to 22, wherein the one or more first mobility events comprise one or more of the following first events:
the one or more second cells corresponding to the one or more first mobility events comprise a serving cell, and link performance of the serving cell measured and/or predicted based on Layer 1 is better than a first threshold;
the one or more second cells comprise a serving cell, and link performance of the serving cell measured and/or predicted based on Layer 1 is worse than a second threshold;
the one or more second cells comprise a candidate cell and a serving cell, and link performance of the candidate cell measured and/or predicted based on Layer 1 is better than first link performance, wherein the first link performance is link performance of the serving cell plus a first offset;
the one or more second cells comprise a candidate cell, and link performance of the candidate cell measured and/or predicted based on Layer 1 is better than a third threshold;
the one or more second cells comprise a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells comprise a candidate cell, and interference of the candidate cell measured and/or predicted based on Layer 1 is stronger than a first interference threshold.

24. The method according to any one of claims 21 to 22, wherein the one or more first mobility events comprise one or more of the following second events:
the one or more second cells corresponding to the one or more first mobility events comprise a serving cell, and performance of a serving spatial filter of the serving cell measured and/or predicted based on Layer 1 is better than a sixth threshold;
the one or more second cells comprise a serving cell, and performance of a serving spatial filter of the serving cell measured and/or predicted based on Layer 1 is worse than a seventh threshold;
the one or more second cells comprise a candidate cell and a serving cell, and performance of a candidate spatial filter of the candidate cell measured and/or predicted based on Layer 1 is better than second link performance, wherein the second link performance is performance of the serving spatial filter of the serving cell plus a second offset;
the one or more second cells comprise a candidate cell, and performance of a candidate spatial filter of the candidate cell measured and/or predicted based on Layer 1 is better than an eighth threshold;
the one or more second cells comprise a candidate cell, performance of a serving spatial filter of a serving cell measured and/or predicted based on Layer 1 is worse than a ninth threshold, and performance of the candidate spatial filter of the candidate cell measured and/or predicted based on Layer 1 is better than a tenth threshold; and/or
the one or more second cells comprise a candidate cell, and interference of a candidate beam of the candidate cell measured and/or predicted based on Layer 1 is stronger than a second interference threshold.

25. The method according to any one of claims 20 to 24, wherein the one or more second mobility events are:
determined by the terminal device; or,
indicated by the network device; or,
predefined.

26. The method according to any one of claims 20 to 25, wherein the second information is transmitted via one or more of the following signaling:
physical layer control signaling;
Medium Access Control layer Control Element (MAC CE) of a Medium Access Control (MAC) layer; and/or
mobility-related signaling of a Radio Resource Control (RRC) layer.

27. The method according to any one of claims 20 to 26, wherein for the one second mobility event, the second information comprises one or more of the following information:
third indication information indicating an event type of the second mobility event; and/or
first information corresponding to the second mobility event.

28. The method according to any one of claims 21 to 24 and 27, wherein the first information comprises one or more of the following information:
a cell index and/or cell link quality; and/or
a spatial filter index and/or spatial filter link quality.

29. The method according to any one of claims 20 to 28, further comprising:
sending, by the network device, a cell switch command to the terminal device, wherein the cell switch command carries third information indicating a target cell, and the third information is associated with the second information.

30. The method according to claim 29, wherein if the target cell indicated by the third information does not belong to the one or more first cells, the third information is further arranged to indicate first measurement resources, wherein the first measurement resources are used for measurement of the target cell and/or reporting of measurement results.

31. The method according to any one of claims 20 to 30, further comprising:
sending, by the network device, first configuration information to the terminal device,
wherein the first configuration information is arranged to configure one or more first sets and/or one or more second sets,
the one or more first sets comprise second measurement resources corresponding to one or more first cells,
the one or more second sets comprise prediction resources of one or more third cells, and
the second cell is one of the one or more third cells.

32. The method according to claim 31, wherein the one or more first cells correspond to one first set.

33. The method according to claim 31 or 32, wherein the one or more third cells correspond to one second set.

34. The method according to any one of claims 31 to 33, wherein the second measurement resources comprised in the first set and the prediction resources comprised in the second set have no same resources; or,
the one first cell corresponds to one first set and one second set, and the first set is a subset of the second set.

35. The method according to any one of claims 31 to 33, wherein the one third cell corresponds to one second set and has no corresponding first set.

36. The method according to any one of claims 31 to 35, wherein the first configuration information is further arranged to configure one or more of the following:
one or more third mobility events, wherein the one or more third mobility events are mobility events predicted using the one or more first measurement results; and/or
first uplink resources or second uplink resources, wherein the first uplink resources are used for reporting of one or more second mobility events, the second uplink resources are used for transmitting first request, the first request is arranged to request the first uplink resources, and the one or more second mobility events are the first mobility events being reported comprised in the first prediction information.

37. The method according to any one of claims 20 to 36, further comprising:
receiving, by the network device, fourth information sent by the terminal device, wherein the fourth information is arranged to indicate one or more of the following capabilities of the terminal device:
whether the terminal device supports measurement of the one or more first measurement results and/or supports prediction of the first prediction information based on the one or more first measurement results;
one or more fourth mobility events, wherein the one or more fourth mobility events are mobility events supported to be predicted by the one or more first measurement results;
a first number, wherein the first number is a number of the one or more first cells supported by the terminal device on one carrier;
a second number, wherein the second number is a number of first sets supported by the terminal device on one carrier, and one of the first sets comprises second measurement resources corresponding to the one or more first cells; and/or
a third number, wherein the third number is the number of second sets supported by the terminal device on one carrier, the second sets are arranged to configure prediction resource(s) of one or more third cells, and the one or more third cells are cells corresponding to one or more prediction results predicted using the one or more first measurement results.

38. A wireless communication method, comprising:
sending, by a terminal device, one or more first measurement results to a network device,
wherein the one or more first measurement results are measurement results obtained by measuring one or more first cells, the one or more first measurement results are arranged to predict first prediction information, the first prediction information is associated with one or more first prediction results, and the one or more first prediction results are measurement results of one or more second cells predicted based on the one or more first measurement results.

39. The method according to claim 38, wherein the first prediction information comprises one or more of the following:
first indication information indicating whether one or more first mobility events occur, wherein the one or more first mobility events are associated with the one or more first prediction results;
second indication information indicating an event type(s) of the occurred first mobility events; and/or
first information indicating one or more first prediction results corresponding to the occurred first mobility events.

40. The method according to claim 39, wherein the one or more first mobility events comprise one or more of the following first events:
the one or more second cells corresponding to the one or more first mobility events comprise a serving cell, and link performance of the serving cell measured and/or predicted based on Layer 1 is better than a first threshold;
the one or more second cells comprise a serving cell, and link performance of the serving cell measured and/or predicted based on Layer 1 is worse than a second threshold;
the one or more second cells comprise a candidate cell and a serving cell, and link performance of the candidate cell measured and/or predicted based on Layer 1 is better than first link performance, wherein the first link performance is link performance of the serving cell plus a first offset;
the one or more second cells comprise a candidate cell, and link performance of the candidate cell measured and/or predicted based on Layer 1 is better than a third threshold;
the one or more second cells comprise a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells comprise a candidate cell, and interference of the candidate cell measured and/or predicted based on Layer 1 is stronger than a first interference threshold.

41. The method according to claim 39, wherein the one or more first mobility events comprise one or more of the following second events:
the one or more second cells corresponding to the one or more first mobility events comprise a serving cell, and performance of a serving spatial filter of the serving cell measured and/or predicted based on Layer 1 is better than a sixth threshold;
the one or more second cells comprise a serving cell, and performance of a serving spatial filter of the serving cell measured and/or predicted based on Layer 1 is worse than a seventh threshold;
the one or more second cells comprise a candidate cell and a serving cell, and performance of a candidate spatial filter of the candidate cell measured and/or predicted based on Layer 1 is better than second link performance, wherein the second link performance is performance of the serving spatial filter of the serving cell plus a second offset;
the one or more second cells comprise a candidate cell, and performance of a candidate spatial filter of the candidate cell measured and/or predicted based on Layer 1 is better than an eighth threshold;
the one or more second cells comprise a candidate cell, performance of a serving spatial filter of a serving cell measured and/or predicted based on Layer 1 is worse than a ninth threshold, and performance of a candidate spatial filter of the candidate cell measured and/or predicted based on Layer 1 is better than a tenth threshold; and/or
the one or more second cells comprise a candidate cell, and interference of a candidate beam of the candidate cell measured and/or predicted based on Layer 1 is stronger than a second interference threshold.

42. The method according to any one of claims 39 to 41, wherein the first information comprises one or more of the following information:
a cell index and/or cell link quality; and/or
a spatial filter index and/or spatial filter link quality.

43. The method according to any one of claims 38 to 42, wherein a transmission manner of the multiple first measurement results comprises one of the following:
transmitting in a first order, wherein the first order is an order of preconfigured or predefined first sets, and one of the first sets comprises second measurement resources corresponding to the one or more first cells;
transmitting in the first order and a second order, wherein the second order is an order of second measurement resources in one of the first sets.

44. The method according to any one of claims 38 to 43, wherein the transmission manner of the multiple first measurement results comprises:
transmitting based on a reporting instance, wherein the reporting instance comprises multiple spatial filter reporting instances.

45. The method according to claim 44, wherein the reporting instance comprises fourth indication information, wherein the fourth indication information is arranged to indicate an order of multiple spatial filter reporting instances comprised in the reporting instance.

46. The method according to claim 45, wherein the multiple spatial filter reporting instances comprised in the reporting instance are configured by the network device.

47. The method according to any one of claims 38 to 46, further comprising:
receiving, by the terminal device, a cell switch command sent by the network device, wherein the cell switch command carries fifth information indicating a target cell, and the fifth information is associated with the first prediction information.

48. The method according to claim 47, wherein if the target cell does not belong to the one or more first cells, the fifth information is further arranged to indicate first measurement resources, wherein the first measurement resources are used for measurement of the target cell and/or reporting of measurement results.

49. The method according to any one of claims 38 to 48, further comprising:
receiving, by the terminal device, second configuration information sent by the network device, wherein the second configuration information is arranged to configure one or more first sets, and the one or more first sets comprise second measurement resources corresponding to the one or more first cells.

50. The method according to claim 49, wherein the one or more first cells correspond to the one first set.

51. The method according to any one of claims 49 to 50, wherein the second configuration information is further arranged to configure third uplink resources, wherein the third uplink resources are used for transmission of the one or more first measurement results.

52. The method according to any one of claims 38 to 51, further comprising:
sending, by the terminal device, sixth information to a network device, wherein the sixth information is arranged to indicate one or more of the following capabilities of the terminal device:
whether the terminal device supports measurement of the one or more first measurement results;
a first number, wherein the first number is a number of first cells supported by the terminal device on one carrier; and/or
a second number, wherein the second number is a number of first sets supported by the terminal device on one carrier, and one of the first sets comprises second measurement resources corresponding to the one or more first cells.

53. A wireless communication method, comprising:
receiving, by a network device, one or more first measurement results sent by a terminal device, wherein the one or more first measurement results are measurement results obtained by measuring one or more first cells;
predicting, by the network device, first prediction information based on the one or more first measurement results,
wherein the first prediction information is associated with one or more first prediction results, and the one or more first prediction results are measurement results of one or more second cells predicted based on the one or more first measurement results.

54. The method according to claim 53, wherein the first prediction information comprises one or more of the following:
first indication information indicating whether one or more first mobility events occur, wherein the one or more first mobility events are associated with the one or more first prediction results;
second indication information indicating an event type(s) of the one or more first mobility events; and/or
first information indicating the one or more first prediction results corresponding to the one or more first mobility events.

55. The method according to claim 54, wherein the one or more first mobility events comprise one or more of the following first events:
the one or more second cells corresponding to the one or more first mobility events comprise a serving cell, and link performance of the serving cell measured and/or predicted based on Layer 1 is better than a first threshold;
the one or more second cells comprise a serving cell, and link performance of the serving cell measured and/or predicted based on Layer 1 is worse than a second threshold;
the one or more second cells comprise a candidate cell and a serving cell, and link performance of the candidate cell measured and/or predicted based on Layer 1 is better than first link performance, wherein the first link performance is link performance of the serving cell plus a first offset;
the one or more second cells comprise a candidate cell, and link performance of the candidate cell measured and/or predicted based on Layer 1 is better than a third threshold;
the one or more second cells comprise a candidate cell and a serving cell, link performance of the serving cell measured and/or predicted based on Layer 1 is worse than a fourth threshold, and link performance of the candidate cell measured and/or predicted based on Layer 1 is better than a fifth threshold; and/or
the one or more second cells comprise a candidate cell, and interference of the candidate cell measured and/or predicted based on Layer 1 is stronger than a first interference threshold.

56. The method according to claim 54, wherein the one or more first mobility events comprise one or more of the following second events:
the one or more second cells corresponding to the one or more first mobility events comprise a serving cell, and performance of a serving spatial filter of the serving cell measured and/or predicted based on Layer 1 is better than a sixth threshold;
the one or more second cells comprise a serving cell, and performance of a serving spatial filter of the serving cell measured and/or predicted based on Layer 1 is worse than a seventh threshold;
the one or more second cells comprise a candidate cell and a serving cell, and performance of a candidate spatial filter of the candidate cell measured and/or predicted based on Layer 1 is better than second link performance, wherein the second link performance is performance of the serving spatial filter of the serving cell plus a second offset;
the one or more second cells comprise a candidate cell, and performance of a candidate spatial filter of the candidate cell measured and/or predicted based on Layer 1 is better than an eighth threshold;
the one or more second cells comprise a candidate cell, performance of a serving spatial filter of a serving cell measured and/or predicted based on Layer 1 is worse than a ninth threshold, and performance of a candidate spatial filter of the candidate cell measured and/or predicted based on Layer 1 is better than a tenth threshold; and/or
the one or more second cells comprise a candidate cell, and interference of a candidate beam of the candidate cell measured and/or predicted based on Layer 1 is stronger than a second interference threshold.

57. The method according to any one of claims 54 to 56, wherein the first information comprises one or more of the following information:
a cell index and/or cell link quality; and/or
a spatial filter index and/or spatial filter link quality.

58. The method according to any one of claims 53 to 57, wherein a transmission manner of the multiple first measurement results comprises one of the following:
transmitting in a first order, wherein the first order is an order of preconfigured or predefined first sets, and one of the first sets comprises second measurement resources corresponding to the one or more first cells; or
transmitting in the first order and a second order, wherein the second order is an order of second measurement resources in the one of the first sets.

59. The method according to any one of claims 53 to 58, wherein the transmission manner of the multiple first measurement results comprises:
transmitting based on a reporting instance, wherein the reporting instance comprises multiple spatial filter reporting instances.

60. The method according to claim 59, wherein the reporting instance comprises fourth indication information, wherein the fourth indication information is arranged to indicate an order of multiple spatial filter reporting instances comprised in the reporting instance.

61. The method according to claim 60, wherein the multiple spatial filter reporting instances comprised in the reporting instance are configured by the network device.

62. The method according to any one of claims 53 to 61, further comprising:
sending, by the network device, a cell switch command to the terminal device, wherein the cell switch command carries fifth information indicating a target cell, and the fifth information is associated with the first prediction information.

63. The method according to claim 62, wherein if the target cell does not belong to the one or more first cells, the fifth information is further arranged to indicate first measurement resources, wherein the first measurement resources are used for measurement of the target cell and/or reporting of measurement results.

64. The method according to any one of claims 53 to 63, further comprising:
sending, by the network device, second configuration information to the terminal device, wherein the second configuration information is arranged to configure one or more first sets, and the one or more first sets comprise second measurement resources corresponding to the one or more first cells.

65. The method according to claim 64, wherein one or more first cells correspond to one first set.

66. The method according to any one of claims 64 to 65, wherein the second configuration information is further arranged to configure third uplink resources, wherein the third uplink resources are used for transmission of the one or more first measurement results.

67. The method according to any one of claims 53 to 66, further comprising:
receiving, by the network device, sixth information sent by the terminal device, wherein the sixth information is arranged to indicate one or more of the following capabilities of the terminal device:
whether the terminal device supports measurement of the one or more first measurement results;
a first number, wherein the first number is a number of first cells supported by the terminal device on one carrier; and/or
a second number, wherein the second number is a number of first sets supported by the terminal device on one carrier, and one of the first sets comprises second measurement resources corresponding to the one or more first cells.

68. A terminal device, comprising:
a first processing unit, configured to predict first prediction information based on one or more first measurement results,
wherein the first prediction information is associated with one or more first prediction results,
the one or more first measurement results are measurement results obtained by measuring one or more first cells, and
the one or more first prediction results are measurement results of one or more second cells predicted based on the one or more first measurement results.

69. A network device, comprising:
a first communication unit, configured to receive second information sent by a terminal device,
wherein the second information is arranged to indicate one or more second mobility event, the one or more second mobility events are reported one or more first mobility events, the one or more first mobility events are associated with one or more first prediction results, the one or more first prediction results are measurement results of one or more second cells predicted based on one or more first measurement results, and the one or more first measurement results are measurement results obtained by measuring one or more first cells; and
wherein the one or more first measurement results are arranged to predict first prediction information, and the first prediction information is associated with the one or more first prediction results.

70. A terminal device, comprising:
a second communication unit, configured to send one or more first measurement results to a network device,
wherein the one or more first measurement results are measurement results obtained by measuring one or more first cells, the one or more first measurement results are arranged to predict first prediction information, the first prediction information is associated with one or more first prediction results, and the one or more first prediction results are measurement results of one or more second cells predicted based on the one or more first measurement results.

71. A network device, comprising:
a third communication unit, configured to receive one or more first measurement results sent by a terminal device, wherein the one or more first measurement results are measurement results obtained by measuring one or more first cells; and
a second processing unit, configured to predict first prediction information based on the one or more first measurement results, wherein the first prediction information is associated with one or more first prediction results, and the one or more first prediction results are measurement results of one or more second cells predicted based on the one or more first measurement results.

72. A terminal device, comprising:
a processor and a memory, wherein the memory is configured to store a computer program, and the processor is configured to call and run the computer program stored in the memory to perform the method according to any one of claims 1 to 19 or perform the method according to any one of claims 38 to 52.

73. A network device, comprising:
a processor and a memory, wherein the memory is configured to store a computer program, and the processor is configured to call and run the computer program stored in the memory to perform the method according to any one of claims 20 to 37 or perform the method according to any one of claims 53 to 67.

74. A chip, comprising:
a processor configured to call and run a computer program from a memory, so that a device installed with the chip performs: the method according to any one of claims 1 to 19, or the method according to any one of claims 20 to 37, or the method according to any one of claims 38 to 52, or the method according to any one of claims 53 to 67.

75. A computer-readable storage medium, configured to store a computer program, wherein running of the computer program causes a computer to perform: the method according to any one of claims 1 to 19, or the method according to any one of claims 20 to 37, or the method according to any one of claims 38 to 52, or the method according to any one of claims 53 to 67.

76. A computer program product comprising computer program instructions,
wherein running of the computer program instructions causes a computer to perform: the method according to any one of claims 1 to 19, or the method according to any one of claims 20 to 37, or the method according to any one of claims 38 to 52, or the method according to any one of claims 53 to 67.

77. A computer program, wherein running of the computer program causes a computer to perform: the method according to any one of claims 1 to 19, or the method according to any one of claims 20 to 37, or the method according to any one of claims 38 to 52, or the method according to any one of claims 53 to 67.
